# EUROPÄISCHE PATENTSCHRIFT

(11) **EP 3 509 885 B1**
(45) Veröffentlichungstag und Bekanntmachung des Hinweises auf die Patenterteilung: **20.08.2025**
(21) Anmeldenummer: 17768042.8
(22) Anmeldetag: 05.09.2017
(51) Int. Cl.: B60K 15/035

(54) **VERFAHREN ZUR INNENDRUCKSTEUERUNG EINES BETRIEBSFLÜSSIGKEITSBEHÄLTERS UND BETRIEBSFLÜSSIGKEITSBEHÄLTERSYSTEM MIT INNENDRUCKSTEUERUNG**
METHOD FOR CONTROLLING THE INTERNAL PRESSURE OF A SERVICE FLUID CONTAINER, AND SERVICE FLUID CONTAINER SYSTEM WITH AN INTERNAL PRESSURE CONTROLLER
PROCÉDÉ DE RÉGULATION DE LA PRESSION INTERNE D'UN RÉSERVOIR DE LIQUIDE DE TRAVAIL ET SYSTÈME DE RÉSERVOIR DE LIQUIDE DE TRAVAIL MUNI D'UNE RÉGULATION DE LA PRESSION INTERNE

(30) Priorität: 06.09.2016 DE 102016216860
(43) Veröffentlichungstag der Anmeldung: 17.07.2019
(73) Patentinhaber: Kautex Textron GmbH & Co. KG, 53229 Bonn (DE)
(72) Erfinder: HEDEVANG, Poul, 53229 Bonn (DE)
(74) Vertreter: Richly & Ritschel Patentanwälte PartG mbB
(86) Internationale Anmeldenummer: PCT/EP2017/072260
(87) Internationale Veröffentlichungsnummer: WO 2018/046502

(56) Entgegenhaltungen:
- DE-A1- 10 247 935
- DE-A1- 102010 019 831
- DE-A1- 102010 054 960
- DE-A1- 102011 084 732
- DE-A1- 102012 221 871
- DE-A1- 102015 012 656
- DE-A1- 19 930 926

## Beschreibung

Die vorliegende Erfindung betrifft ein Verfahren zur Innendrucksteuerung eines Betriebsflüssigkeitsbehälters eines Kraftfahrzeugs. Ferner betrifft die vorliegende Erfindung ein Betriebsflüssigkeitsbehältersystem.

Im Folgenden wird auf als Kraftstoffbehälter bzw. als Kraftstofftanks ausgebildete Betriebsflüssigkeitsbehälter und auf als Kraftstoffbehältersysteme ausgebildete Betriebsflüssigkeitsbehältersysteme Bezug genommen. Betriebsflüssigkeitsbehälter im Sinne der Erfindung sind insbesondere aber nicht ausschließlich Kraftstoffbehälter (für Ottokraftstoff oder Dieselkraftstoff) für Kraftfahrzeuge, Harnstoffbehälter, Wischwasserbehälter, Ölbehälter, Nebenflüssigkeitsbehälter oder Additivbehälter für Kraftfahrzeuge. Behälter der eingangs genannten Art werden häufig durch Extrusionsblasformen hergestellt, wobei sich insbesondere HDPE (High Density Polyethylene) für die Herstellung extrusionsblasgeformter Behälter eignet. Ferner ist es möglich, entsprechende Betriebsflüssigkeitsbehälter mittels eines Spritzgießverfahrens herzustellen. Weiterhin können auch aus Metall gebildete Betriebsflüssigkeitsbehälter verwendet werden.

Bei Kraftfahrzeugen mit einer Brennkraftmaschine wird bei einer Wärmebeaufschlagung eines Kraftstoffbehälters der Kraftstoff ebenfalls erwärmt, sodass der Dampfdruck des Kraftstoffs ansteigt und der Kraftstoffbehälter mit einem entsprechenden Innendruck beaufschlagt wird. Der Druckanstieg innerhalb des Kraftstoffbehälters würde so lange andauern, bis der Innendruck des Kraftstoffbehälters dem Partialdruck des Kraftstoffs entspricht und sich ein Druckgleichgewicht einstellt. Dabei ist bei hohen Umgebungstemperaturen der Partialdruck und der sich somit einstellende Innendruck des Kraftstoffbehälters größer als bei niedrigen Umgebungstemperaturen. Durch eine entsprechende Innendruckbeaufschlagung unterliegt der Kraftstoffbehälter einer Deformation.

Zum Entlüften eines Kraftstoffbehälters weist dieser zumindest ein Entlüftungsventil auf, das wiederum mit einer Entlüftungsleitung zur Ableiten des Überdrucks an die Atmosphäre fluidverbunden ist. Insbesondere bei einem für Ottokraftstoff ausgebildeten Kraftstoffbehälter ist dessen Entlüftungsleitung mit einem Aktivkohlefilter zum Durchleiten und Ausfiltern von Treibstoffdämpfen fluidverbunden. Die durch das Aktivkohlefilter gefilterten Gase werden nach Passieren des Aktivkohlefilters an die Atmosphäre abgegeben. Das Aktivkohlefilter wird im Betrieb der Brennkraftmaschine mittels Ansaugluft gespült, so dass in der Aktivkohle gebundene Treibstoffdämpfe der Brennkraftmaschine zugeführt werden können. Aufgrund des Spülvorgangs mit Ansaugluft kann die Aufnahmekapazität des Aktivkohlefilters begrenzt werden.

Kraftfahrzeuge, die über einen Hybridantrieb verfügen, die also sowohl über einen Verbrennungsmotor als auch über einen Elektromotor zum Antreiben des Kraftfahrzeugs verfügen, benötigen einen Kraftstoffbehälter, der erhöhten Innendrücken standhalten kann. Bei solchen Hybrid-Kraftfahrzeugen wird aufgrund der verminderten Betriebszeit der Brennkraftmaschine ein mit dem Kraftstoffbehälter fluidverbundenes Aktivkohlefilter entsprechend weniger gespült, so dass auch weniger in der Aktivkohle gebundener Treibstoffdampf herausgespült werden kann. Ferner wird durch Entlüften des Kraftstoffbehälters über das Aktivkohlefilter weiterer Kraftstoff in die Dampfphase überführt, so dass es vorteilhaft wäre, den Kraftstoffbehälter steifer und/oder druckfester auszuführen.

Folglich sind für Kraftstoffbehälter, die für Hybrid-Kraftfahrzeuge konzipiert sind, andere Entlüftungsventile notwendig als für Kraftstoffbehälter, die für konventionelle, d.h. lediglich einen Verbrennungsmotor aufweisende Kraftfahrzeuge konzipiert sind. Denn ein Maximalinnendruck für einen Kraftstoffbehälter für ein Hybrid-Kraftfahrzeug ist größer als ein Maximalinnendruck eines Kraftstoffbehälters für ein konventionelles Kraftfahrzeug, so dass unterschiedliche Entlüftungsventile verbaut werden müssen. Daher ist es für einen Produzenten von Kraftstoffbehältern und im Allgemeinen von Betriebsflüssigkeitsbehältern notwendig, eine Vielzahl von unterschiedlich ausgebildeten Entlüftungsventilen zu konzipieren und zu bevorraten, was zu einem erhöhten Herstellungsaufwand und zu erhöhten Herstellungskosten führt.

Beispiele von Verfahren zur Innendrucksteuerung eines Betriebsflüssigkeitsbehälters eines Kraftfahrzeugs sind außerdem aus DE19930926A1, DE102015012656A1 und DE102010054960A1 bekannt.

Der vorliegenden Erfindung liegt die Aufgabe zugrunde, ein Verfahren zur Steuerung eines Innendrucks eines Betriebsflüssigkeitsbehälters bereitzustellen, durch das der Aufwand und die Herstellungskosten eines Betriebsflüssigkeitsbehälters reduziert werden. Ferner liegt der vorliegenden Erfindung die Aufgabe zugrunde, ein Betriebsflüssigkeitsbehältersystem bereitzustellen, das einen verminderten Herstellungsaufwand und verminderte Herstellungskosten aufweist.

Die der vorliegenden Erfindung zugrundeliegende Aufgabe wird durch ein Verfahren zur Innendrucksteuerung eines Betriebsflüssigkeitsbehälters mit den Merkmalen des Anspruchs 1 gelöst. Vorteilhafte Ausgestaltungen des erfindungsgemäßen Verfahrens sind in den von Anspruch 1 abhängigen Ansprüchen offenbart.

Die der vorliegenden Erfindung zugrundeliegende Aufgabe wird ferner durch ein Betriebsflüssigkeitsbehältersystem mit den Merkmalen des Anspruchs 4 gelöst. Vorteilhafte Ausgestaltungen des erfindungsgemäßen Betriebsflüssigkeitsbehältersystems sind in den von Anspruch 4 abhängigen Ansprüchen offenbart.

Ein Verfahren zur Innendrucksteuerung eines Betriebsflüssigkeitsbehälters eines Kraftfahrzeugs weist vorzugsweise folgende Verfahrensschritte auf:
- Ermitteln eines Innendrucks des Betriebsflüssigkeitsbehälters mittels eines in einem Betriebsflüssigkeitsbehälterinnenraum angeordneten Drucksensors;
- Vergleichen des ermittelten Innendrucks mit einem vorbestimmten Maximalinnendruck mittels einer elektronischen Steuerungseinrichtung;
- Ausgeben eines Öffnungssignals von der Steuerungseinrichtung an ein Entlüftungsventil, das in einer Entlüftungsleitung oder zwischen dem Betriebsflüssigkeitsbehälterinnenraum und der Entlüftungsleitung angeordnet ist, wobei die Entlüftungsleitung den Betriebsflüssigkeitsbehälterinnenraum mit der Atmosphäre fluidverbindet, wenn der ermittelte Innendruck gleich dem Maximalinnendruck oder größer als der Maximalinnendruck ist; und
- Überführen des Entlüftungsventils in eine Offenstellung, in der der Betriebsflüssigkeitsbehälterinnenraum mit der Atmosphäre mittels des Entlüftungsventils fluidverbunden ist, bei Empfang des Öffnungssignals.

Mittels eines solchen Verfahrens wird erreicht, dass ein Entlüftungsventil einer Bauart für unterschiedliche Betriebsflüssigkeitsbehälter, die jeweils für unterschiedliche Maximalinnendrücke, die auch als Grenzdrücke bezeichnet werden können, ausgebildet sind, verwendet werden kann. Selbiges gilt für die elektronische Steuerungseinrichtung, die über eine Datenleitung zum Austausch von Daten mit dem Entlüftungsventil und dem Drucksensor verbunden ist. Auch die elektronische Steuerungseinrichtung kann für unterschiedliche Betriebsflüssigkeitsbehälter verwendet werden, wobei für unterschiedliche Betriebsflüssigkeitsbehälter mit unterschiedlichen Maximalinnendrücken lediglich der Maximalinnendruck entsprechend in der elektronischen Steuerungseinrichtung oder in einer Speichereinrichtung, auf die die elektronische Steuerungseinrichtung Zugriff hat, abgelegt sein muss.

Das Verfahren zur Innendrucksteuerung kann auch als Verfahren zur Entlüftungssteuerung eines Betriebsflüssigkeitsbehälters bezeichnet werden.

Bei dem Betriebsflüssigkeitsbehälter handelt es sich vorzugsweise um einen Kraftstoffbehälter, der auch als Kraftstofftank bezeichnet werden kann. Der Kraftstoffbehälter ist vorzugsweise zur Aufnahme von Ottokraftstoff ausgebildet. Weiter vorzugsweise ist der Kraftstoffbehälter zur Aufnahme von Dieselkraftstoff ausgebildet.

Der Innendruck des Betriebsflüssigkeitsbehälters ist der Druck innerhalb des Betriebsflüssigkeitsbehälters, also des Drucks im Betriebsflüssigkeitsbehälterinnenraum.

Der Drucksensor kann auch als Innendrucksensor bezeichnet werden.

Der vorbestimmte Maximalinnendruck, der auch als Grenzinnendruck bezeichnet werden kann, ist vorzugsweise in der elektronischen Steuerungseinrichtung, im Genaueren in einer Speichereinrichtung, die in der elektronischen Steuerungseinrichtung integriert ist oder auf die die elektronische Steuerungseinrichtung Zugriff hat, gespeichert.

Bei der elektronischen Steuerungseinrichtung handelt es sich vorzugsweise um eine datenverarbeitende Steuerungseinrichtung. Die Steuerungseinrichtung kann eine separate Steuerungseinrichtung des Betriebsflüssigkeitsbehälters bzw. eines Betriebsflüssigkeitsbehältersystems und/oder eine Steuerungs-einrichtung des Kraftfahrzeugs sein, in dem der Betriebsflüssigkeitsbehälter verbaut ist.

Bei dem Entlüftungsventil handelt es sich um ein Entlüftungsventil des Betriebsflüssigkeitsbehälters. Das Entlüftungsventil kann sich in einer Offenstellung und in einer Schließstellung befinden. In der Offenstellung ist der Betriebsflüssigkeitsbehälterinnenraum mittels der Entlüftungsleitung und dem Entlüftungsventil mit der Atmosphäre fluidverbunden. Vorzugsweise ist in dem durch die Entlüftungsleitung und dem Entlüftungsventil gebildeten Entlüftungspfad zusätzlich ein Adsorptionsfilter zum Adsorbieren von Kohlenwasserstoffen angeordnet, d.h., dass der Betriebsflüssigkeitsbehälterinnenraum mit dem Adsorptionsfilter und dieses mit der Atmosphäre fluidverbunden ist. Eine Entlüftung des Betriebsflüssigkeitsbehälterinnenraums erfolgt somit über das Adsorptionsfilter. In der Schließstellung des Entlüftungsventils ist der Betriebsflüssigkeitsbehälterinnenraum von der Atmosphäre fluidgetrennt. In dem Fall, dass in dem Entlüftungspfad ein Adsorptionsfilter angeordnet ist, ist in der Schließstellung des Entlüftungsventils der Betriebsflüssigkeitsbehälterinnenraum von dem Adsorptionsfilter fluidgetrennt.

Vorzugsweise weist das Verfahren folgende Verfahrensschritte auf:
- Vergleichen des ermittelten Innendrucks mit einem vorbestimmten Minimalinnendruck mittels der elektronischen Steuerungseinrichtung;
- Ausgeben eines Öffnungssignals von der Steuerungseinrichtung an das Entlüftungsventil, wenn der ermittelte Innendruck gleich dem Minimalinnendruck oder kleiner als der Minimalinnendruck ist; und
- Überführen des Entlüftungsventils in die Offenstellung, in der der Betriebsflüssigkeitsbehälterinnenraum von der Atmosphäre mittels des Entlüftungsventils fluidgetrennt ist, bei Empfang des Öffnungssignals.

Ein Betriebsflüssigkeitsbehälter unterliegt einem Unterdruck, wenn Betriebsflüssigkeit aus dem Behälter gefördert wird und/oder wenn Betriebsflüssigkeit, z.B. Kraftstoff kondensiert. Das entsprechend ausgebildete Verfahren bietet den Vorteil, dass der Betriebsflüssigkeitsbehälter vor einem übermäßigen Unterdruck geschützt ist. Ferner wird mittels des entsprechend ausgebildeten Verfahrens erreicht, dass ein Entlüftungsventil einer Bauart für unterschiedliche Betriebsflüssigkeitsbehälter, die jeweils für unterschiedliche Minimal-innendrücke ausgebildet sind, verwendet werden kann. Selbiges gilt für die elektronische Steuerungseinrichtung, die über eine Datenleitung zum Austausch von Daten mit dem Entlüftungsventil und dem Drucksensor verbunden ist. Auch die elektronische Steuerungseinrichtung kann für unterschiedliche Betriebsflüssigkeitsbehälter verwendet werden, wobei für unterschiedliche Betriebsflüssigkeitsbehälter mit unterschiedlichen Minimalinnendrücken lediglich der Minimalinnendruck entsprechend in der elektronischen Steuerungseinrichtung oder in einer Speichereinrichtung, auf die die elektronische Steuerungseinrichtung Zugriff hat, abgelegt sein muss.

Die der vorliegenden Erfindung zugrundeliegende Aufgabe wird durch ein Verfahren zur Innendrucksteuerung eines Betriebsflüssigkeitsbehälters eines Kraftfahrzeugs gelöst, wobei das erfindungsgemäße Verfahren folgende Verfahrensschritte aufweist:
- Ermitteln eines Innendrucks des Betriebsflüssigkeitsbehälters mittels eines in einem Betriebsflüssigkeitsbehälterinnenraum angeordneten Drucksensors;
- Ermitteln eines Umgebungsdrucks des Betriebsflüssigkeitsbehälters mittels eines Umgebungsdrucksensors;
- Bestimmen eines Differenzdrucks zwischen dem Innendruck und dem Umgebungsdruck mittels einer elektronischen Steuerungseinrichtung;
- Vergleichen des Differenzdrucks mit einem vorbestimmten Maximaldifferenzdruck mittels der Steuerungseinrichtung;
- Ausgeben eines Öffnungssignals von der Steuerungseinrichtung an ein Entlüftungsventil, das in einer Entlüftungsleitung oder zwischen dem Betriebsflüssigkeitsbehälterinnenraum und der Entlüftungsleitung angeordnet ist, wobei die Entlüftungsleitung den Betriebsflüssigkeitsbehälterinnenraum mit der Atmosphäre fluidverbindet, wenn der ermittelte Differenzdruck gleich dem Maximaldifferenzdruck oder größer als der Maximaldifferenzdruck ist; und
- Überführen des Entlüftungsventils in eine Offenstellung, in der der Betriebsflüssigkeitsbehälterinnenraum mit der Atmosphäre mittels des Entlüftungsventils fluidverbunden ist, bei Empfang des Öffnungssignals.

Mittels des entsprechend ausgebildeten erfindungsgemäßen Verfahrens lässt sich ein Überschreiten eines für den Betriebsflüssigkeitsbehälter schädlichen Überdrucks mit einer nochmals erhöhten Genauigkeit und Zuverlässigkeit verhindern. Denn es wird auch der dem Innendruck des Betriebsflüssigkeitsbehälters entgegenwirkende Umgebungsdruck des Betriebsflüssigkeitsbehälters zur Steuerung des Entlüftungsventils berücksichtigt. So wird ein Überführen des Entlüftungsventils in dessen Offenstellung in Abhängigkeit des Umgebungsdrucks durchgeführt.

Auch mittels des entsprechend ausgebildeten Verfahrens wird erreicht, dass ein Entlüftungsventil einer Bauart für unterschiedliche Betriebsflüssigkeitsbehälter, die jeweils für unterschiedliche Maximalinnendrücke ausgebildet sind, verwendet werden kann. Selbiges gilt für die elektronische Steuerungseinrichtung, die über eine Datenleitung zum Austausch von Daten mit dem Entlüftungsventil, dem Drucksensor und dem Umgebungsdrucksensor verbunden ist. Auch die elektronische Steuerungseinrichtung kann für unterschiedliche Betriebsflüssigkeitsbehälter verwendet werden, wobei für unterschiedliche Betriebsflüssigkeitsbehälter mit unterschiedlichen Maximaldifferenzdrücken lediglich der Maximaldifferenzdruck entsprechend in der elektronischen Steuerungseinrichtung oder in einer Speichereinrichtung, auf die die elektronische Steuerungseinrichtung Zugriff hat, abgelegt sein muss.

Das Verfahren zur Innendrucksteuerung kann auch als Verfahren zur Entlüftungssteuerung eines Betriebsflüssigkeitsbehälters bezeichnet werden.

Bei dem Betriebsflüssigkeitsbehälter handelt es sich vorzugsweise um einen Kraftstoffbehälter, der auch als Kraftstofftank bezeichnet werden kann. Der Kraftstoffbehälter ist vorzugsweise zur Aufnahme von Ottokraftstoff ausgebildet. Weiter vorzugsweise ist der Kraftstoffbehälter zur Aufnahme von Dieselkraftstoff ausgebildet.

Der Innendruck des Betriebsflüssigkeitsbehälters ist der Druck innerhalb des Betriebsflüssigkeitsbehälters, also des Drucks im Betriebsflüssigkeitsbehälterinnenraum. Der Drucksensor kann auch als Innendrucksensor bezeichnet werden.

Bei dem Umgebungsdruck des Betriebsflüssigkeitsbehälters handelt es sich um den Außendruck bzw. den atmosphärischen Druck. Der Differenzdruck ergibt sich folglich aus der Subtraktion des Umgebungsdrucks von dem Innendruck. Der Umgebungsdrucksensor kann auch als Außendrucksensor bezeichnet werden. Der Umgebungsdrucksensor ist außerhalb des Betriebsflüssigkeitsbehälterinnenraums angeordnet.

Der vorbestimmte Maximaldifferenzdruck, der auch als Grenzdifferenzdruck bezeichnet werden kann, ist vorzugsweise in der elektronischen Steuerungseinrichtung, im Genaueren in einer Speichereinrichtung, die in der elektronischen Steuerungseinrichtung integriert ist oder auf die die elektronische Steuerungseinrichtung Zugriff hat, gespeichert.

Bei der elektronischen Steuerungseinrichtung handelt es sich vorzugsweise um eine datenverarbeitende Steuerungseinrichtung. Die Steuerungseinrichtung kann eine separate Steuerungseinrichtung des Betriebsflüssigkeitsbehälters bzw. eines Betriebsflüssigkeitsbehältersystems und/oder eine Steuerungseinrichtung des Kraftfahrzeugs sein, in dem der Betriebsflüssigkeitsbehälter verbaut ist.

Bei dem Entlüftungsventil handelt es sich um ein Entlüftungsventil des Betriebsflüssigkeitsbehälters. Das Entlüftungsventil kann sich in einer Offenstellung und in einer Schließstellung befinden. In der Offenstellung ist der Betriebsflüssigkeitsbehälterinnenraum mittels der Entlüftungsleitung und dem Entlüftungsventil mit der Atmosphäre fluidverbunden. Vorzugsweise ist in dem durch die Entlüftungsleitung und dem Entlüftungsventil gebildeten Entlüftungspfad zusätzlich ein Adsorptionsfilter zum Adsorbieren von Kohlenwasserstoffen angeordnet, d.h., dass der Betriebsflüssigkeitsbehälterinnenraum mit dem Adsorptionsfilter und dieses mit der Atmosphäre fluidverbunden ist. Eine Entlüftung des Betriebsflüssigkeitsbehälterinnenraums erfolgt somit über das Adsorptionsfilter. In der Schließstellung des Entlüftungsventils ist der Betriebsflüssigkeitsbehälterinnenraum von der Atmosphäre fluidgetrennt. In dem Fall, dass in dem Entlüftungspfad ein Adsorptionsfilter angeordnet ist, ist in der Schließstellung des Entlüftungsventils der Betriebsflüssigkeitsbehälterinnenraum von dem Adsorptionsfilter fluidgetrennt.

Das Verfahren weist ferner folgende Verfahrensschritte auf:
- Vergleichen des Differenzdrucks mit einem vorbestimmten Minimaldifferenzdruck mittels der Steuerungseinrichtung;
- Ausgeben eines Öffnungssignals von der Steuerungseinrichtung an das Entlüftungsventil, wenn der ermittelte Differenzdruck gleich dem Minimaldifferenzdruck oder kleiner als der Minimaldifferenzdruck ist; und
- Überführen des Entlüftungsventils in die Offenstellung, in der der Betriebsflüssigkeitsbehälterinnenraum mit der Atmosphäre mittels des Entlüftungsventils fluidverbunden ist, bei Empfang des Öffnungssignals.

Mittels des entsprechend ausgebildeten erfindungsgemäßen Verfahrens lässt sich ein Unterschreiten eines für den Betriebsflüssigkeitsbehälter schädlichen Unterdrucks mit einer nochmals erhöhten Genauigkeit und Zuverlässigkeit verhindern. Denn es wird auch der dem Innendruck des Betriebsflüssigkeitsbehälters entgegenwirkende Umgebungsdruck des Betriebsflüssigkeitsbehälters zur Steuerung des Entlüftungsventils berücksichtigt. So wird ein Überführen des Entlüftungsventils in dessen Offenstellung in Abhängigkeit des Umgebungsdrucks durchgeführt.

Ein Betriebsflüssigkeitsbehälter unterliegt einem Unterdruck, wenn Betriebsflüssigkeit aus dem Behälter gefördert wird und/oder wenn Betriebsflüssigkeitdampf, z.B. Kraftstoffdampf kondensiert. Das entsprechend ausgebildete Verfahren bietet den Vorteil, dass der Betriebsflüssigkeitsbehälter vor einem übermäßigen Unterdruck geschützt ist. Ferner wird mittels des entsprechend ausgebildeten Verfahrens erreicht, dass ein Entlüftungsventil einer Bauart für unterschiedliche Betriebsflüssigkeitsbehälter, die jeweils für unterschiedliche Minimaldifferenzdrücke ausgebildet sind, verwendet werden kann. Selbiges gilt für die elektronische Steuerungseinrichtung, die über eine Datenleitung zum Austausch von Daten mit dem Entlüftungsventil, dem Drucksensor und dem Umgebungsdrucksensor verbunden ist. Auch die elektronische Steuerungseinrichtung kann für unterschiedliche Betriebsflüssigkeitsbehälter verwendet werden, wobei für unterschiedliche Betriebsflüssigkeitsbehälter mit unterschiedlichen Minimaldifferenzdrücken lediglich der Minimaldifferenzdruck entsprechend in der elektronischen Steuerungseinrichtung oder in einer Speichereinrichtung, auf die die elektronische Steuerungseinrichtung Zugriff hat, abgelegt sein muss.

Vorzugsweise ist das Verfahren derart ausgebildet, dass bei dem Verfahrensschritt des Überführens des Entlüftungsventils in dessen Offenstellung das Entlüftungsventil graduell in dessen Offenstellung überführt wird.

Unter einem graduellen Überführen des Entlüftungsventils in dessen Offenstellung ist ein allmähliches Überführen des Entlüftungsventils in dessen Offenstellung zu verstehen, bei dem ein Entlüftungsquerschnitt des Entlüftungsventils über eine vorgegebene Zeit kontinuierlich bis hin zu einem maximal erreichbaren Entlüftungsquerschnitt gesteigert wird.

Beispielsweise kann der Entlüftungsquerschnitt des Entlüftungsventils bei Empfang des Öffnungssignals für eine vorgegebene Zeit auf beispielsweise 10% (mehr oder weniger ist auch möglich) des maximal erreichbaren Entlüftungsquerschnitts eingestellt werden, bevor das Entlüftungsventil komplett in dessen Offenstellung überführt wird.

Bei einer entsprechenden Ausgestaltung des Verfahrens werden Druckspitzen bei einer Entlüftung und/oder bei einer Belüftung des Betriebsflüssigkeitsbehälters vermieden, was insbesondere bei als für Hybrid-Kraftfahrzeuge ausgebildeten Kraftstoffbehältern von Vorteil ist, da sich in diesen Behältern ein recht großer Überdruck bzw. Unterdruck aufbauen kann.

Vorzugsweise ist das Verfahren derart ausgebildet, dass es folgende Verfahrensschritte aufweist:
- Ermitteln, ob sich ein in einer Spülleitung oder zwischen einem Spülanschluss eines Adsorptionsfilters und der Spülleitung angeordnetes Regenerierventil in einer Offenstellung befindet, wobei die Spülleitung einen Adsorptionsfilterinnenraum mit einem Ansaugtrakt einer Brennkraftmaschine des Kraftfahrzeugs fluidverbindet;
- Ausgeben eines Schließsignals von der Steuerungseinrichtung an das Entlüftungsventil, wenn sich das Regenerierventil in der Offenstellung befindet; und
- Überführen des Entlüftungsventils in eine Schließstellung, in der der Betriebsflüssigkeitsbehälterinnenraum von der Atmosphäre mittels des Entlüftungsventils fluidgetrennt ist, bei Empfang des Schließsignals.

Das entsprechend ausgebildete Verfahren bieten den Vorteil, dass in dem Betriebsflüssigkeitsbehälter kein unnötiger Unterdruck erzeugt wird. Ferner bietet das entsprechend ausgebildete Verfahren den Vorteil, dass sich die Zusammensetzung des Kraftstoffgemisches, das von der Brennkraftmaschine über deren Ansaugtrakt angesaugt wird, nicht plötzlich ändert, so dass eine gleichmäßigere Abgasqualität erreicht wird.

Wenn sich das Regenerierventil in dessen Offenstellung befindet, wird bei sich im Betrieb befindlicher Brennkraftmaschine das Adsorptionsfilter mittels Ansaugluft der Brennkraftmaschine gespült. Folglich wird dann bei dem Adsorptionsfilter ein Spülvorgang zum Lösen von Kohlenwasserstoffen von sich im Adsorptionsfilter befindlichem Adsorptionsmaterial durchgeführt.

Allgemein lässt sich das erste Merkmal auch wie folgt formulieren: Ermitteln, ob eine Fluidverbindung zwischen einem Spülanschluss des Adsorptionsfilters und einem Ansaugtrakt der Brennkraftmaschine besteht / etabliert ist.

Eine andere Formulierung des ersten Merkmals kann auch wie folgt lauten: Ermitteln, ob sich ein in einem zwischen einem Adsorptionsfilter und einem Ansaugtrakt der Brennkraftmaschine bestehenden Spülpfads angeordnetes Regenerierventils in einer Offenstellung befindet.

Alternativ kann das erste Merkmal auch wie folgt formuliert werden: Ermitteln, ob ein Spülvorgang des Adsorptionsfilters durchgeführt wird.

Die der vorliegenden Erfindung zugrundeliegende Aufgabe wird ferner durch ein Betriebsflüssigkeitsbehältersystem gelöst, das folgendes aufweist:
- zumindest einen Betriebsflüssigkeitsbehälter;
- zumindest einen in einem Betriebsflüssigkeitsbehälterinnenraum angeordneten Drucksensor zur Bestimmung eines Innendrucks des Betriebsflüssigkeitsbehälterinnenraums;
- eine Entlüftungsleitung, die den Betriebsflüssigkeitsbehälterinnenraum mit der Atmosphäre fluidverbindet;
- ein elektrisch betätigbares Entlüftungsventil, das in der Entlüftungsleitung und zwischen einer Offenstellung, in der der Betriebsflüssigkeitsbehälterinnenraum mit der Atmosphäre fluidverbunden ist, und einer Schließstellung, in der der Betriebsflüssigkeitsbehälterinnenraum mittels des Entlüftungsventils von der Atmosphäre fluidgetrennt ist, betätigbar ist; und
- eine elektronische Steuerungseinrichtung, die mit dem Drucksensor und dem Entlüftungsventil über eine Datenleitung verbunden und zum Ausführen eines Verfahrens gemäß einem der Ansprüche 1 und/oder 2 ausgebildet ist.

Das erfindungsgemäße Betriebsflüssigkeitsbehältersystem bietet den Vorteil, dass ein Entlüftungsventil einer Bauart für unterschiedliche Betriebsflüssigkeitsbehälter, die jeweils für unterschiedliche Maximalinnendrücke ausgebildet sind, verwendet werden kann. Selbiges gilt für die elektronische Steuerungseinrichtung, die über eine Datenleitung zum Austausch von Daten mit dem Entlüftungsventil und dem Drucksensor verbunden ist. Auch die elektronische Steuerungseinrichtung kann für unterschiedliche Betriebsflüssigkeitsbehälter verwendet werden, wobei für unterschiedliche Betriebsflüssigkeitsbehälter mit unterschiedlichen Maximalinnendrücken lediglich der Maximalinnendruck entsprechend in der elektronischen Steuerungseinrichtung oder in einer Speichereinrichtung, auf die die elektronische Steuerungseinrichtung Zugriff hat, abgelegt sein muss.

Bei dem Betriebsflüssigkeitsbehälter handelt es sich vorzugsweise um einen Kraftstoffbehälter, der auch als Kraftstofftank bezeichnet werden kann. Der Kraftstoffbehälter ist vorzugsweise zur Aufnahme von Ottokraftstoff ausgebildet. Weiter vorzugsweise ist der Kraftstoffbehälter zur Aufnahme von Dieselkraftstoff ausgebildet.

Der vorbestimmte Maximalinnendruck, der auch als Grenzinnendruck bezeichnet werden kann, ist vorzugsweise in der elektronischen Steuerungseinrichtung, im Genaueren in einer Speichereinrichtung, die in der elektronischen Steuerungseinrichtung integriert ist oder auf die die elektronische Steuerungseinrichtung Zugriff hat, gespeichert.

Bei der elektronischen Steuerungseinrichtung handelt es sich vorzugsweise um eine datenverarbeitende Steuerungseinrichtung. Die Steuerungseinrichtung kann eine separate Steuerungseinrichtung des Betriebsflüssigkeitsbehälters bzw. eines Betriebsflüssigkeitsbehältersystems und/oder eine Steuerungs-einrichtung des Kraftfahrzeugs sein, in dem der Betriebsflüssigkeitsbehälter verbaut ist.

Bei dem Entlüftungsventil handelt es sich um ein Entlüftungsventil des Betriebsflüssigkeitsbehälters. Das Entlüftungsventil kann sich in einer Offenstellung und in einer Schließstellung befinden. In der Offenstellung ist der Betriebsflüssigkeitsbehälterinnenraum mittels der Entlüftungsleitung und dem Entlüftungsventil mit der Atmosphäre fluidverbunden. Vorzugsweise ist in dem durch die Entlüftungsleitung und dem Entlüftungsventil gebildeten Entlüftungspfad zusätzlich ein Adsorptionsfilter zum Adsorbieren von Kohlenwasserstoffen angeordnet, d.h., dass der Betriebsflüssigkeitsbehälterinnenraum mit dem Adsorptionsfilter und dieses mit der Atmosphäre fluidverbunden ist. Eine Entlüftung des Betriebsflüssigkeitsbehälterinnenraums erfolgt somit über das Adsorptionsfilter. In der Schließstellung des Entlüftungsventils ist der Betriebsflüssigkeitsbehälterinnenraum von der Atmosphäre fluidgetrennt. In dem Fall, dass in dem Entlüftungspfad ein Adsorptionsfilter angeordnet ist, ist in der Schließstellung des Entlüftungsventils der Betriebsflüssigkeitsbehälterinnenraum von dem Adsorptionsfilter fluidgetrennt.

Das Betriebsflüssigkeitsbehältersystem weist einen Umgebungsdrucksensor zum Ermitteln eines Umgebungsdrucks des Betriebsflüssigkeitsbehälters auf.

Vorzugsweise ist die elektronische Steuerungseinrichtung dazu ausgebildet, ein Verfahren nach Anspruch 3 auszuführen.

Das entsprechend ausgebildete Betriebsflüssigkeitsbehältersystem bietet den Vorteil, dass der Betriebsflüssigkeitsbehälter vor einem übermäßigen Unterdruck geschützt ist. Ferner wird mittels des entsprechend ausgebildeten Betriebsflüssigkeitsbehältersystems erreicht, dass ein Entlüftungsventil einer Bauart für unterschiedliche Betriebsflüssigkeitsbehälter, die jeweils für unterschiedliche Minimalinnendrücke ausgebildet sind, verwendet werden kann. Selbiges gilt für die elektronische Steuerungseinrichtung, die über eine Datenleitung zum Austausch von Daten mit dem Entlüftungsventil und dem Drucksensor verbunden ist. Auch die elektronische Steuerungseinrichtung kann für unterschiedliche Betriebsflüssigkeits-behälter verwendet werden, wobei für unterschiedliche Betriebsflüssigkeitsbehälter mit unterschiedlichen Minimalinnendrücken lediglich der Minimalinnendruck entsprechend in der elektronischen Steuerungseinrichtung oder in einer Speichereinrichtung, auf die die elektronische Steuerungseinrichtung Zugriff hat, abgelegt sein muss.

Der Umgebungsdrucksensor ist vorzugsweise außerhalb des Betriebsflüssigkeitsbehälterinnenraums angeorndet.

Weiter vorzugsweise weist das Betriebsflüssigkeitsbehältersystem ein Adsorptionsfilter auf, das mittels eines Eingangsanschlusses mit der Entlüftungsleitung und mittels eines Ausgangsanschlusses mit der Atmosphäre fluidverbunden ist, wobei die elektronische Steuerungseinrichtung dazu ausgebildet ist, folgende Verfahrensschritte auszuführen:
- Ermitteln, ob sich ein in einer Spülleitung oder zwischen einem Spülanschluss eines Adsorptionsfilters und der Spülleitung angeordnetes Regenerierventil in einer Offenstellung befindet, wobei die Spülleitung einen Adsorptionsfilterinnenraum mit einem Ansaugtrakt einer Brennkraftmaschine des Kraftfahrzeugs fluidverbindet;
- Ausgeben eines Schließsignals von der Steuerungseinrichtung an das Entlüftungsventil, wenn sich das Regenerierventil in der Offenstellung befindet; und
- Überführen des Entlüftungsventils in eine Schließstellung, in der der Betriebsflüssigkeitsbehälterinnenraum von der Atmosphäre mittels des Entlüftungsventils fluidgetrennt ist, bei Empfang des Schließsignals.

Das entsprechend ausgebildete Betriebsflüssigkeitsbehälter-system bieten den Vorteil, dass in dem Betriebsflüssigkeitsbehälter kein unnötiger Unterdruck entsteht. Ferner ist gewährleistet, dass sich die Zusammensetzung des Kraftstoffgemisches, das von der Brennkraftmaschine über deren Ansaugtrakt angesaugt wird, nicht plötzlich ändert, so dass eine gleichmäßigere Abgasqualität erreicht wird.

Wenn sich das Regenerierventil in dessen Offenstellung befindet, wird bei sich im Betrieb befindlicher Brennkraftmaschine das Adsorptionsfilter mittels Ansaugluft der Brennkraftmaschine gespült. Folglich wird dann bei dem Adsorptionsfilter ein Spülvorgang zum Lösen von Kohlenwasserstoffen von sich im Adsorptionsfilter befindlichem Adsorptionsmaterial durchgeführt.

Das Adsorptionsfilter, das vorzugsweise als Aktivkohlefilter ausgebildet ist, weist für die Fluidverbindung mit der Entlüftungsleitung einen Eingangsanschluss und für die Fluidverbindung mit der Atmosphäre einen Ausgangsanschluss auf.

Vorzugsweise ist zwischen dem Ausgangsanschluss des Adsorptionsfilters und der Atmosphäre ein Absperrventil angeordnet, das weiter vorzugsweise elektrisch, d.h. elektromechanisch und/oder elektromagnetisch zwischen einer Offenstellung und einer Schließstellung betätigbar ist.

Weiter vorzugsweise weist das Betriebsflüssigkeitsbehältersystem ein Überdruckschutzventil auf, das in der Entlüftungsleitung oder zwischen dem Betriebsflüssigkeitsbehälterinnenraum und der Entlüftungsleitung angeordnet ist, wobei das Überdruckschutzventil zwischen einer Offenstellung, in der ein Gasaustausch durch das Überdruckschutzventil ermöglicht ist, und einer Schließstellung, in der ein Gasaustausch durch das Überdruckschutzventil unterbunden ist, beweglich ist. Das Überdruckschutzventil befindet sich in dessen Schließstellung, wenn der Innendruck im Betriebsflüssigkeitsbehälterinnenraum kleiner als der Maximaldruck ist, und das Überdruckschutzventil wird in dessen Offenstellung überführt, wenn der Innendruck im Betriebsflüssigkeitsbehälterinnenraum größer als der Maximaldruck ist.

Das entsprechend ausgebildete Betriebsflüssigkeitsbehältersystem bietet den Vorteil, dass bei einem Stromausfall, z.B. wenn eine Batterie zum Betätigen des Entlüftungsventils aufgrund langer Standzeiten des Kraftfahrzeugs leer ist, sich im Betriebsflüssigkeitsbehälter kein über den Maximaldruck hinausgehender Überdruck aufbauen kann. Dies ist insbesondere vorteilhaft bei einem Entlüftungsventil, das sich stromlos in dessen Schließstellung befindet.

Das Überdruckschutzventil ist folglich parallel zum Entlüftungsventil geschaltet.

Das Überdruckschutzventil ist ein passives Überdruckschutzventil. D.h., dass ein Ventilkörper des Überdruckschutzventils nicht elektrisch (d.h. weder elektromechanisch noch elektromagnetisch) sondern lediglich durch eine Druckdifferenz beweglich ist.

In der Offenstellung des Überdruckschutzventils ist ein Ventilkörper des Überdruckschutzventils von einem Ventilsitz des Überdruckschutzventils beabstandet. In der Schließstellung des Überdruckschutzventils verschließt der Ventilkörper des Überdruckschutzventils den Ventilsitz des Überdruckschutzventils.

Weiter vorzugsweise weist das Betriebsflüssigkeitsbehältersystem ein Unterdruckschutzventil auf, das in der Entlüftungsleitung oder zwischen dem Betriebsflüssigkeitsbehälterinnenraum und der Entlüftungsleitung (70) angeordnet ist, wobei Unterdruckschutzventil zwischen einer Offenstellung, in der ein Gasaustausch durch das Unterdruckschutzventil ermöglicht ist, und einer Schließstellung, in der ein Gasaustausch durch das Unterdruckschutzventil unterbunden ist, beweglich ist. Das Unterdruckschutzventil befindet sich in dessen Schließstellung, wenn der Innendruck im Betriebsflüssigkeitsbehälterinnenraum größer als der Minimaldruck ist, und das Unterdruckschutzventil wird in dessen Offenstellung überführt, wenn der Innendruck im Betriebsflüssigkeitsbehälterinnenraum kleiner als der Minimaldruck ist.

Das entsprechend ausgebildete Betriebsflüssigkeitsbehältersystem bietet den Vorteil, dass bei einem Stromausfall, z.B. wenn eine Batterie zum Betätigen des Entlüftungsventils aufgrund langer Standzeiten des Kraftfahrzeugs leer ist, sich im Betriebsflüssigkeitsbehälter kein den Minimalinnendruck unterschreitender Unterdruck einstellen kann. Dies ist insbesondere vorteilhaft bei einem Entlüftungsventil, das sich stromlos in dessen Schließstellung befindet.

Das Unterdruckschutzventil ist folglich parallel zum Entlüftungsventil geschaltet.

Das Unterdruckschutzventil ist ein passives Unterdruckschutzventil. D.h., dass ein Ventilkörper des Unterdruckschutzventils nicht elektrisch (d.h. weder elektromechanisch noch elektromagnetisch) sondern lediglich durch eine Druckdifferenz beweglich ist.

In der Offenstellung des Unterdruckschutzventils ist ein Ventilkörper des Unterdruckschutzventils von einem Ventilsitz des Unterdruckschutzventils beabstandet. In der Schließstellung des Unterdruckschutzventils verschließt der Ventilkörper des Unterdruckschutzventils den Ventilsitz des Unterdruckschutzventils.

Weiter vorzugsweise weist das Betriebsflüssigkeitsbehältersystem ein in den Betriebsflüssigkeitsbehälterinnenraum mündendes Einfüllrohr und eine Betankungsentlüftungsleitung auf, die mit dem Betriebsflüssigkeitsbehälterinnenraum und dem Einfüllrohr fluidverbunden ist. Das elektrisch betätigbare Entlüftungsventil ist als Betriebs- und/oder Betankungsentlüftungsventil mit einem Betriebsentlüftungseingangsanschluss, einem Betriebsentlüftungsausgangsanschluss, einem Betankungsentlüftungseingangsanschluss und einem Betankungsentlüftungsausgangsanschluss ausgebildet. Der Betriebsentlüftungseingangsanschluss und der Betankungsentlüftungseingangsanschluss sind jeweils mit dem Betriebsflüssigkeitsbehälterinnenraum fluidverbunden, der Betriebsentlüftungsausgangsanschluss ist mit der Atmosphäre fluidverbunden, und der Betankungsentlüftungsausgangsanschluss ist mit dem Einfüllrohr fluidverbunden. Das Betriebs- und/oder Betankungsentlüftungsventil ist zwischen einer Belüftungsstellung, einer Betankungsstellung und einer Schließstellung elektrisch betätigbar, wobei in der Belüftungsstellung ist der Betriebsflüssigkeitsbehälterinnenraum mittels des Betriebs-und/oder Betankungsentlüftungsventils mit der Atmosphäre und mit dem Einfüllrohr fluidverbunden. In der Betankungsstellung ist der Betriebsflüssigkeitsbehälterinnenraum mittel des Betriebs-und/oder Betankungsentlüftungsventils von der Atmosphäre fluidgetrennt und mittels des Betriebs- und/oder Betankungsentlüftungsventils mit dem Einfüllrohr fluidverbunden, und in der Schließstellung ist der Betriebsflüssigkeitsbehälterinnenraum mittel des Betriebs- und/oder Betankungsentlüftungsventils von der Atmosphäre und dem Einfüllrohr fluidgetrennt.

Vorzugsweise ist Betriebsentlüftungsausgangsanschluss mit der Atmosphäre über ein Adsorptionsfilter fluidverbunden. Folglich wird bei einer Betriebsentlüftung das aus dem Betriebsflüssigkeitsbehälter austretende Gas durch das Adsorptionsfilter geleitet.

Weitere Vorteile, Einzelheiten und Merkmale der Erfindung ergeben sich nachfolgend aus den erläuterten Ausführungsbeispielen. Dabei zeigen im Einzelnen:
- Figur 1:: ein Verfahrensablaufplan eines Verfahrens zur Innendrucksteuerung eines Betriebsflüssigkeitsbehälters nach einer ersten Ausführungsform ;
- Figur 2:: ein Verfahrensablaufplan eines weiteren Verfahrens zur Innendrucksteuerung eines Betriebsflüssigkeitsbehälters nach einer zweiten Ausführungsform ;
- Figur 3:: ein Verfahrensablaufplan eines weiteren Verfahrens zur Innendrucksteuerung eines Betriebsflüssigkeitsbehälters nach einer dritten Ausführungsform ;
- Figur 4:: ein Verfahrensablaufplan eines erfindungsgemäßen Verfahrens nach einer vierten Ausführungsform der vorliegenden Erfindung;
- Figur 5:: ein Verfahrensablaufplan eines erfindungsgemäßen Verfahrens nach einer fünften Ausführungsform der vorliegenden Erfindung;
- Figur 6:: ein erfindungsgemäßes Betriebsflüssigkeitsbehältersystem nach einer sechsten Ausführungsform der vorliegenden Erfindung;
- Figur 7:: ein erfindungsgemäßes Betriebsflüssigkeitsbehältersystem nach einer siebten Ausführungsform der vorliegenden Erfindung;
- Figur 8:: ein erfindungsgemäßes Betriebsflüssigkeitsbehältersystem nach einer achten Ausführungsform der vorliegenden Erfindung; und
- Figur 9:: ein erfindungsgemäßes Betriebsflüssigkeitsbehältersystem nach einer neunten Ausführungsform der vorliegenden Erfindung.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

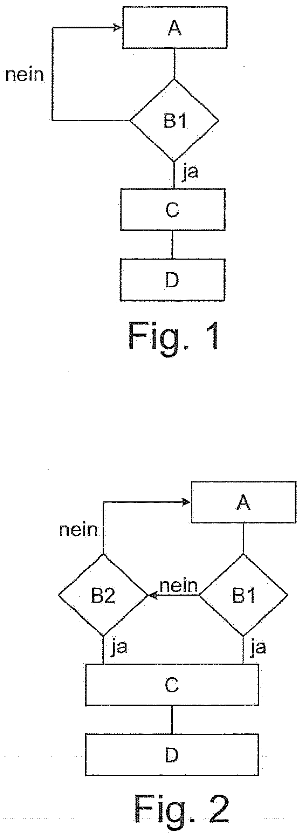

Figur 1 zeigt ein Verfahrensablaufplan eines Verfahrens zur Innendrucksteuerung eines Betriebsflüssigkeitsbehälters nach einer ersten Ausführungsform .

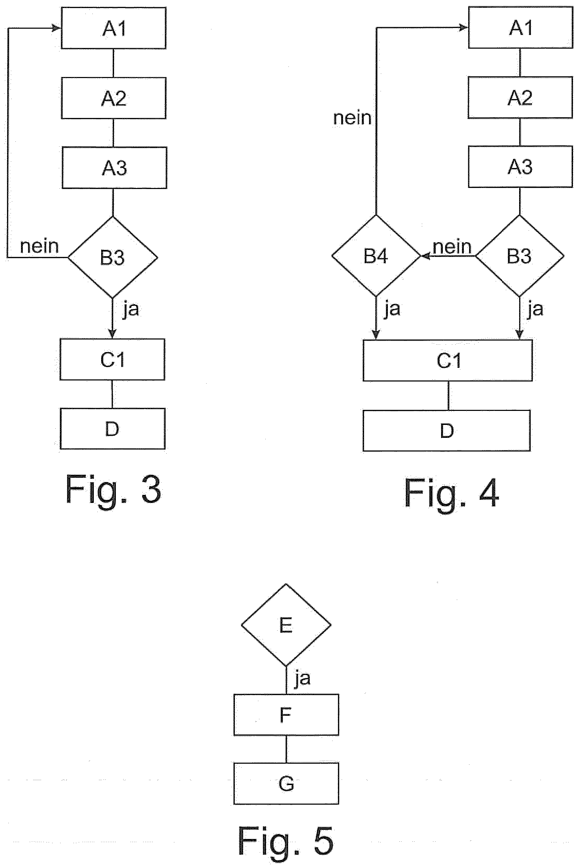

In einem ersten Verfahrensschritt A wird ein Innendruck eines Betriebsflüssigkeitsbehälter 10 (siehe Figuren 5 bis 8) ermittelt. Die Ermittlung des Innendrucks kann beispielsweise mittels eines in einem Betriebsflüssigkeitsbehälterinnenraum 11 angeordneten Drucksensors 15 erfolgen. Der Drucksensor 15 kann alternativ auch in einem Einfüllrohr 12 angeordnet sein.

In einem zweiten Verfahrensschritt B1 wird der ermittelte Innendruck mit einem vorbestimmten Maximalinnendruck verglichen. Dieser Vergleich kann vorzugsweise mittels einer elektronischen Steuerungseinrichtung erfolgen. Wenn der ermittelte Innendruck kleiner als der vorbestimmte Maximalinnendruck ist, wird zum ersten Verfahrensschritt A zurückgeleitet.

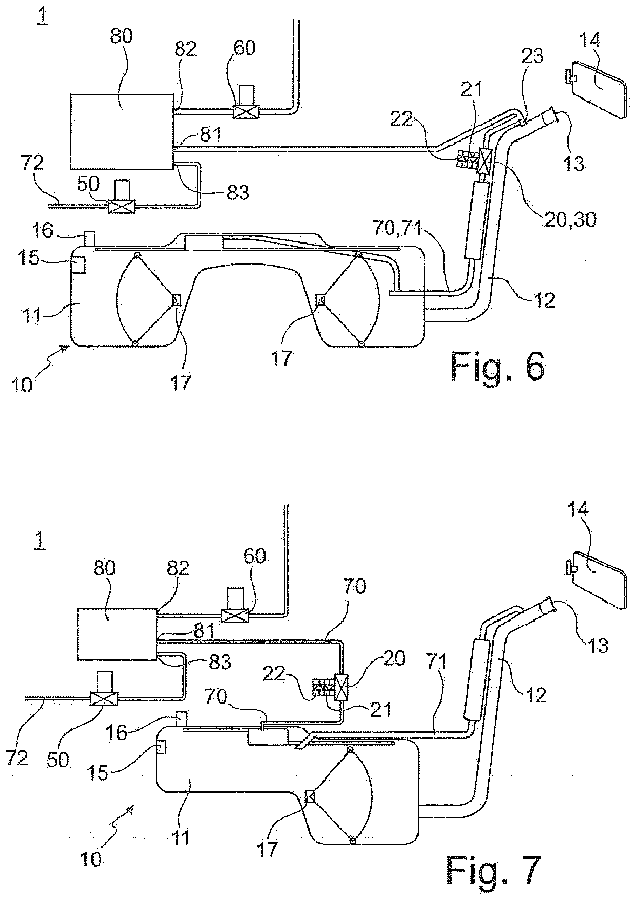

Wenn hingegen der ermittelte Innendruck gleich dem Maximalinnendruck oder größer als der Maximalinnendruck ist, wird in einem dritten Verfahrensschritte C ein Öffnungssignal ausgegeben. Das Öffnungssignal wird dabei vorzugsweise mittels der elektronischen Steuerungseinrichtung an ein Entlüftungsventil 20 ausgegeben. Wie aus den Figuren 6 bis 9 ersichtlich ist, ist das Entlüftungsventil 20 in einer Entlüftungsleitung 70 oder zwischen dem Betriebsflüssigkeitsbehälterinnenraum 11 und der Entlüftungsleitung 70 angeordnet, wobei die Entlüftungsleitung 70 den Betriebsflüssigkeitsbehälterinnenraum 11 mit der Atmosphäre fluidverbindet.

Bei Empfang des Öffnungssignals wird in einem vierten Verfahrensschritt die das Entlüftungsventil 20 in eine Offenstellung überführt, in der der Betriebsflüssigkeitsbehälterinnenraum 11 mit der Atmosphäre mittels des Entlüftungsventils 20 fluidverbunden ist.

Figur 2 zeigt ein Verfahrensablaufplan eines weiteren Verfahrens zur Innendrucksteuerung eines Betriebsflüssigkeitsbehälters nach einer zweiten Ausführungsform .

Der erste Verfahrensschritt A und der zweite Verfahrensschritt B2 sind identisch ausgebildet wie bei dem Verfahren gemäß der ersten Ausführungsform. Wenn in dem zweiten Verfahrensschritte B1 ermittelt wird, dass der ermittelte Innendruck kleiner als der Maximalinnendruck ist, das heißt wenn der ermittelte Innendruck nicht gleich dem Maximaldruck und nicht größer als der Maximalinnendruck ist, wird ein fünfter Verfahrensschritt B2 ausgeführt, in dem der ermittelte Innendruck mit einem vorbestimmten Minimalinnendruck verglichen wird. Der fünfte Verfahrensschritt B2 wird dabei vorzugsweise mittels der elektronischen Steuerungseinrichtung durchgeführt.

Wenn in dem fünften Verfahrensschritte B2 ermittelt wird, dass der ermittelte Innendruck ungleich dem Minimalinnendruck oder größer als der Minimalinnendruck ist, wird zu dem ersten Verfahrensschritt A zurückgeleitet. Wenn hingegen in dem fünften Verfahrensschritte B2 ermittelt wird, dass der ermittelte Innendruck gleich dem Minimalinnendruck oder kleiner als der Minimalinnendruck ist, wird der dritte Verfahrensschritt C ausgeführt, d.h., dass ein Öffnungssignal an das Entlüftungsventil 20 ausgegeben wird. Dieser Verfahrensschritt wird vorzugsweise durch die elektronische Steuerungseinrichtung ausgeführt. Anschließend wird der vierte Verfahrensschritt D ausgeführt, gemäß dem das Entlüftungsventil 20 bei Empfang des Öffnungssignals in die Offenstellung überführt wird, wobei in der Offenstellung des Entlüftungsventils 20 der Betriebsflüssigkeitsbehälterinnenraum 11 mit der Atmosphäre mittels des Entlüftungsventils 20 fluidverbunden ist.

Mittels des Verfahrens gemäß der zweiten Ausführungsform der vorliegenden Erfindung wird somit erreicht, dass sich der Innendruck des Betriebsflüssigkeitsbehälters 10 in einem vorbestimmten Druckbereich befindet, wobei der vorbestimmte Druckbereich durch den Minimalinnendruck und durch den Maximalinnendruck begrenzt ist.

Figur 3 zeigt ein Verfahrensablaufplan eines weiteren Verfahrens zur Innendrucksteuerung eines Betriebsflüssigkeitsbehälters nach einer dritten Ausführungsform .

In einem ersten Verfahrensschritt A1 wird ein Innendruck des Betriebsflüssigkeitsbehälters 10 ermittelt. Die Ermittlung des Innendrucks erfolgt dabei mittels eines in dem Betriebsflüssigkeitsbehälterinnenraum 11 angeordneten Drucksensors 15.

Anschließend wird in einem zweiten Verfahrensschritt A2 ein Umgebungsdruck des Betriebsflüssigkeitsbehälters 10 ermittelt. Die Ermittlung des Umgebungsdrucks erfolgt mittels eines Umgebungsdrucksensors 16, der außerhalb des Betriebsflüssigkeitsbehälterinnenraums 11 angeordnet ist.

In einem dritten Verfahrensschritt A3 wird ein Differenzdruck zwischen dem Innendruck und dem Umgebungsdruck bestimmt, wobei der dritte Verfahrensschritt vorzugsweise mittels der elektronischen Steuerungseinrichtung durchgeführt wird. Der Differenzdruck ergibt sich folglich aus der Subtraktion des ermittelten Umgebungsdrucks von dem ermittelten Innendruck.

In einem vierten Verfahrensschritte B3, der vorzugsweise ebenfalls durch die elektronische Steuerungseinrichtung ausgeführt wird, wird der Differenzdruck mit einem vorbestimmten Maximaldifferenzdruck verglichen. Wenn der Differenzdruck kleiner als der Maximaldifferenzdruck ist, wird zum ersten Verfahrensschritt A1 zurückgeleitet.

Wenn hingegen in dem vierten Verfahrensschritte B3 ermittelt wird, dass der ermittelte Differenzdruck gleich dem Maximaldifferenzdruck oder größer als der Maximaldifferenzdruck ist, wird ein fünfter Verfahren Schritt C1 ausgeführt, gemäß dem ein Öffnungssignal an das Entlüftungsventil 20 ausgegeben wird. Das Öffnungssignal Signal wird dabei von der elektronischen Steuerungseinrichtung ausgegeben. Das Entlüftungsventil 20 ist dabei in der Entlüftungsleitung 70 oder zwischen dem Betriebsflüssigkeitsbehälterinnenraum 11 und der Entlüftungsleitung 70 angeordnet. Folglich ist der Betriebsflüssigkeitsbehälterinnenraum 11 mittels der Entlüftungsleitung 70 mit der Atmosphäre fluidverbunden.

Bei Empfang des Öffnungssignals wird in einem sechsten Verfahrensschritt das Entlüftungsventil 20 in dessen Offenstellung überführt, in der der Betriebsflüssigkeitsbehälterinnenraum 11 mit der Atmosphäre mittels des Entlüftungsventils 20 fluidverbunden ist.

Figur 4 zeigt ein Verfahrensablaufplan eines erfindungsgemäßen Verfahrens nach einer vierten Ausführungsform der vorliegenden Erfindung.

Dabei sind die ersten vier Verfahrensschritte, d.h. der erste Verfahrensschritt A1, der zweite Verfahrensschritt A2, der dritte Verfahrensschritt A3 und der vierte Verfahrensschritt B3 des Verfahrens gemäß der vierten Ausführungsform identisch ausgebildeten mit den ersten vier Verfahrensschritten der dritten Ausführungsform.

Wenn in dem vierten Verfahrensschritte B3 ermittelt wird, dass der ermittelte Differenzdruck kleiner als der Maximaldifferenzdruck ist, wird ein Verfahrensschritte B4 ausgeführt, gemäß dem der Differenzdruck mit einem vorbestimmten Minimaldifferenzdruck verglichen wird. Wenn der Minimaldifferenzdruck größer als der Minimaldifferenzdruck ist, wird zu dem ersten Verfahrensschritt A1 zurückgeleitet.

Wenn hingegen in dem siebten Verfahrensschritte B4 ermittelt wird, dass der Differenzdruck gleich dem Minimaldifferenzdruck oder kleiner als der Minimaldifferenzdruck ist, wird der fünfte Verfahrensschritt C1 ausgeführt, gemäß dem ein Öffnungssignal von der Steuerungseinrichtung an das Entlüftungsventil 20 mittels der elektronischen Steuerungseinrichtung ausgegeben wird. Anschließend wird in dem sechsten Verfahrensschritt D bei Empfang des Öffnungssignals das Entlüftungsventil 20 in dessen Offenstellung überführt, in der der Betriebsflüssigkeitsbehälterinnenraum 11 mit der Atmosphäre mittels des Entlüftungsventils 20 fluidverbunden ist.

Figur 5 zeigt ein Verfahrensablaufplan eines erfindungsgemäßen Verfahrens nach einer fünften Ausführungsform der vorliegenden Erfindung.

Das Verfahren gemäß der fünften Ausführungsform der vorliegenden Erfindung schließt sich dem Verfahrensschritt D der vorhergehenden Ausführungsformen an, gemäß dem das Entlüftungsventil 20 bei Empfang eines Öffnungssignals in dessen Offenstellung überführt wird.

In einem achten Verfahrensschritt wird ermittelt, ob sich ein in einer Spülleitung 72 oder zwischen einem Spülanschluss 83 eines Adsorptionsfilters 80 und der Spülleitung 72 angeordnetes Regenerierventil 50 in einer Offenstellung befindet, wobei die Spülleitung 72 einen Adsorptionsfilterinnenraum mit einem Ansaugtrakt einer Brennkraftmaschine des Kraftfahrzeugs fluidverbindet. Anschließend wird in einem neunten Verfahrensschritt F ein Schließsignals von der Steuerungseinrichtung an das Entlüftungsventil 20 ausgegeben, wenn sich das Regenerierventil 50 in der Offenstellung befindet. In einem zehnten Verfahrensschritte G wird bei Empfang des Schließsignals durch das Entlüftungsventil 20 das Entlüftungsventil 20 in eine Schließstellung überführt, in der der Betriebsflüssigkeitsbehälterinnenraum 11 von der Atmosphäre mittels des Entlüftungsventils 20 fluidgetrennt ist.

In Figur 6 ist ein Betriebsflüssigkeitsbehältersystem 1 gemäß einer sechsten Ausführungsform der vorliegenden Erfindung dargestellt, wobei das Betriebsflüssigkeitsbehältersystem 1 zum Ausführen eines Verfahrens nach einem der ersten bis fünften Ausführungsbeispiele ausgebildet ist. Das ist Figur 6 dargestellte Betriebsflüssigkeitsbehältersystem ist als sogenanntes Onboard-Refuelling-Vapour-Recovery-System ausgebildet.

Das Betriebsflüssigkeitsbehältersystem 1 weist einen Betriebsflüssigkeitsbehälter 10 auf, der in dem vorliegenden Ausführungsbeispiel als auch in den nachfolgenden Ausführungsbeispielen als Kraftstoffbehälter 10 ausgebildet ist. In einem Betriebsflüssigkeitsbehälterinnenraum 11 des Betriebsflüssigkeitsbehälters 10 ist ein Drucksensor 15 zur Bestimmung eines Innendrucks des Betriebsflüssigkeitsbehältersinnenraums 11 angeordnet. Der Betriebsflüssigkeitsbehälter 10 ist in dem dargestellten Ausführungsbeispiel als ein Satteltank 10 ausgebildet, wobei in zwei Hauptvolumina des Betriebsflüssigkeitsbehälters 10 jeweils ein Füllstandsensor 17 zur Bestimmung eines Füllstandes in den zwei Hauptvolumina des Betriebsflüssigkeitsbehälters 10 angeordnet sind.

In dem dargestellten Ausführungsbeispiel erfolgt eine Entlüftung des Betriebsflüssigkeitsbehälterinnenraums 11 über eine Entlüftungsleitung 70, 71, die in dem dargestellten Ausführungsbeispiel als Betriebs- und/oder Betankungsentlüftungsleitung 70, 71 ausgebildet ist, und die folglich zum Entlüften im Betrieb als auch zum Entlüften während eines Betankungsvorganges geeignet ist. In der Entlüftungsleitung 70, 71 ist ein Entlüftungsventil 20, 30 angeordnet, dass in dem dargestellten Ausführungsbeispiel als Betriebs- und/oder Betankungsentlüftungsventils 20, 30 ausgebildet ist.

Das Betriebsflüssigkeitsbehältersystem 1 weist ein Einfüllrohr 12 auf, das in den Betriebsflüssigkeitsbehälterinnenraum 11 mündet. Das Einfüllrohr 12 ist durch einen Einfüllrohrverschluss 13 verschließbar. Ferner ist aus der Figur 6 ersichtlich, dass das Betriebsflüssigkeitsbehältersystem 1 ferner eine Tankklappe 14 aufweist, hinter der ein Einfüllstutzen, der einseitig an dem Einfüllrohr 12 angeordnet ist, angeordnet ist. Bei Einführen eines Zapfventils in das Einfüllrohr 12 über den Einfüllstutzen wird mittels eines Gasfluss-Steuerungselements 23 ein Gasfluss gesteuert. Die Steuerung des Gasflusses kann dergestalt sein, dass der gesamte Gasfluss zu einem Adsorptionsfilter 80 geleitet wird. Ferner kann die Steuerung des Gasflusses kann dergestalt sein, dass ein Teil des Gasflusses in den Betriebsflüssigkeitsbehälterinnenraum 11 rezirkuliert wird. Die Steuerung des Gasflusses kann auch dergestalt sein, dass bei Einführen eines Zapfventils in das Einfüllrohrs 12 der gesamte Gasfluss aus dem Einfüllstutzen des Einfüllrohrs 12 herausgeleitet wird. Ferner ist es auch möglich, dass die Steuerung des Gasflusses dergestalt ist, dass ein Teil des Gasflusses bei in das Einfüllrohr 12 eingeführten Zapfventils zu dem Adsorptionsfilter 80 geleitet wird und ein verbleibender Gasfluss aus dem Einfüllrohr 12 ausgeleitet wird. Wenn kein Zapfventil in das Einfüllrohr 12 eingeführt ist, wird während des Betriebs ein Gasstrom durch das Gasfluss-Steuerungselement 23 stets zu dem Adsorptionsfilter 80 geleitet.

Das Betriebsflüssigkeitsbehältersystem 1 weist ein Überdruckschutzventil 21 auf, das in der Entlüftungsleitung 70, 71 angeordnet ist. Das Überdruckschutzventil 21 ist zwischen einer Offenstellung, in der ein Gasaustausch durch das Überdruckschutzventil 21 ermöglicht ist, und einer Schließstellung, in der ein Gasaustausch durch das Überdruckschutzventil 21 unterbunden ist, beweglich bzw. veränderbar. Das Überdruckschutzventil 21 befindet sich dabei in dessen Schließstellung, wenn der Innendruck im Betriebsflüssigkeitsbehälterinnenraum 11 kleiner als ein vorbestimmter Maximaldruck ist. Hingegen befindet sich das Überdruckschutzventil 21 in dessen Offenstellung, wenn der Innendruck im Betriebsflüssigkeitsbehälterinnenraum 11 größer als der Maximaldruck ist. Das Betriebsflüssigkeitsbehältersystem 1 weist ferner ein Unterdruckschutzventil 22 auf, das in der Entlüftungsleitung 70, 71 angeordnet ist. Das Unterdruckschutzventil 21 ist zwischen einer Offenstellung, in der ein Gasaustausch durch das Unterdruckschutzventil 21 ermöglicht ist, und einer Schließstellung, in der ein Gasaustausch durch das Unterdruckschutzventil 21 unterbunden ist, beweglich bzw. veränderbar. Das Unterdruckschutzventil 22 befindet sich in dessen Schließstellung, wenn der Innendruck im Betriebsflüssigkeitsbehälterinnenraum 11 größer als der Minimaldruck ist. Wenn der Innendruck im Betriebsflüssigkeitsbehälterinnenraum 11 kleiner als der Minimaldruck ist, wird das Unterdruckschutzventil 22 in dessen Offenstellung überführt.

Wie aus Figur 6 ersichtlich ist, weist das Betriebsflüssigkeitsbehältersystem 1 ferner einen Umgebungsdrucksensor 16 auf, der außerhalb des Betriebsflüssigkeitsbehälterinnenraums 11 angeordnet ist. Mittels des durch den Drucksensor 15 ermittelten Innendrucks und mittels des durch den Umgebungsdruck Sensors 16 ermittelten Umgebungsdrucks lässt sich somit ein Differenzdruck zwischen dem Innendruck und dem Umgebungsdruck bestimmen.

Das Adsorptionsfilter 80 ist über einen Eingangsanschluss 81 mit dem Betriebsflüssigkeitsbehälterinnenraum 11 fluidverbunden. Ferner weist das Adsorptionsfilter 80 einen Ausgangsanschluss 82 auf, über den das Adsorptionsfilter 80 mit der Atmosphäre fluidverbunden ist. Wie aus Figur 6 ersichtlich ist, ist zwischen der Atmosphäre und dem Ausgangsanschluss 82 des Adsorptionsfilters 80 ein Tank-Isolationsventil 60 angeordnet. In einer Offenstellung des Tank-Isolationsventils 60 ist der Adsorptionsfilterinnenraum mit der Atmosphäre fluidverbunden, wohingegen in einer Schließstellung des Tank-Isolationsventils 60 der Adsorptionsfilterinnenraum von der Atmosphäre fluidgetrennt ist. Das Adsorptionsfilter 80 weist ferner einen Spülanschluss 83 auf, mittels dem der Adsorptionsfilterinnenraum über eine Spülleitung 72 mit einem Ansaugtrakt einer Brennkraftmaschine eines Kraftfahrzeugs, in dem das Betriebsflüssigkeitsbehältersystems 1 verbaut ist, fluidverbunden ist. Zwischen dem Spülanschluss 83 und dem Ansaugtrakt der nicht dargestellten Brennkraftmaschine ist ein Regenerierventil 50 angeordnet. In einer Offenstellung des Regenerierventils 50 ist der Adsorptionsfilterinnenraum mit dem Ansaugtrakt fluidverbunden, wohingegen in einer Schließstellung des Regenerierventils 50 der Adsorptionsfilterinnenraum von dem Ansaugtrakt fluidgetrennt ist.

Das Entlüftungsventil 20, bzw. das Betriebs- und/oder Betankungsentlüftungsventils 20, 30, das Regenerierventil 50 und das Tank-Isolationsventil 60 sind jeweils als elektrisch betätigbare Ventile ausgebildet. Folglich lassen sich diese Ventile zwischen einer Offenstellung und einer Schließstellung elektrisch, das heißt elektromechanisch und/oder elektromagnetisch verstellen. Die genannten Ventile sind jeweils über Datenleitungen mit einer in den Figuren nicht dargestellten elektronischen Steuerungseinrichtung verbunden. Ferner sind auch der Innendrucksensor 15 und der Umgebungsdrucksensor 16 mit der elektronischen Steuerungseinrichtung über in den Figuren nicht dargestellte Datenleitungen zum Austausch von Daten verbunden. Selbiges gilt für die Füllstandsensoren 17, die über Datenleitungen mit der elektronischen Steuerungseinrichtung zum Datenaustausch verbunden sind. Die elektronische Steuerungseinrichtung ist dazu ausgebildet, die in den ersten bis fünften Ausführungsbeispielen beschriebenen Verfahren auszuführen.

In Figur 7 ist ein Betriebsflüssigkeitsbehältersystem 1 gemäß einer siebten Ausführungsform der vorliegenden Erfindung dargestellt. Bei dem Betriebsflüssigkeitsbehältersystem 1 gemäß der siebten Ausführungsform ist der Betriebsflüssigkeitsbehälter 10 nicht als Satteltank ausgebildet, in dem lediglich ein Füllstandsensor 17 angeordnet ist. Das Entlüftungsventil 20 ist als Betriebsentlüftungsventil 20 ausgebildet und in der Entlüftungsleitung 70, die als Betriebsentlüftungsleitung 70 ausgebildet ist, angeordnet. Das Überdruckschutzventil 21 und das Unterdruckschutzventil 22 sind ebenfalls in der Betriebsentlüftungsleitung 70 angeordnet und jeweils zwischen einer Offenstellung, in der ein Gasaustausch durch das jeweilige Ventil möglich ist, und einer Schließstellung, in der ein Gasaustausch durch das jeweilige Ventil unterbunden ist, beweglich. Das Überdruckschutzventil 21 befindet sich dabei in dessen Schließstellung, wenn der Innendruck im Betriebsflüssigkeitsbehälterinnenraum 11 kleiner als der Maximaldruck ist. Das Überdruckschutzventil 21 wird in dessen Offenstellung überführt, wenn der Innendruck im Betriebsflüssigkeitsbehälterinnenraum 11 größer als der Maximaldruck ist. Das Unterdruckschutzventil 22 befindet sich in dessen Schließstellung, wenn der Innendruck im Betriebsflüssigkeitsbehälterinnenraum 11 größer als der Minimaldruck ist. Wenn der Innendruck im Betriebsflüssigkeitsbehälterinnenraum 11 kleiner als der Minimaldruck ist, wird das Unterdruckschutzventil 22 in dessen Offenstellung überführt.

Der Betriebsflüssigkeitsbehälterinnenraum 11 ist ferner über eine Betankungsentlüftungsleitung 71 mit dem Einfüllrohrs 12 zur Ableitung von Gasen während eines Betankungsvorganges ausgebildet, wobei die aus dem Betriebsflüssigkeitsbehältersinnenraum 11 ausgeleiteten Gase über den Einfüllstutzen des Einfüllrohrs 12 abgeleitet werden. Der übrige Aufbau des in Figur 7 dargestellten Betriebsflüssigkeitsbehältersystems 1 ist identisch mit dem Aufbau und der Funktionalität des in Figur 6 dargestellten Betriebsflüssigkeitsbehältersystems, sodass hinsichtlich des Aufbaus und der Funktionalität auf die Ausführungen mit Bezug auf Figur 6 verwiesen wird.

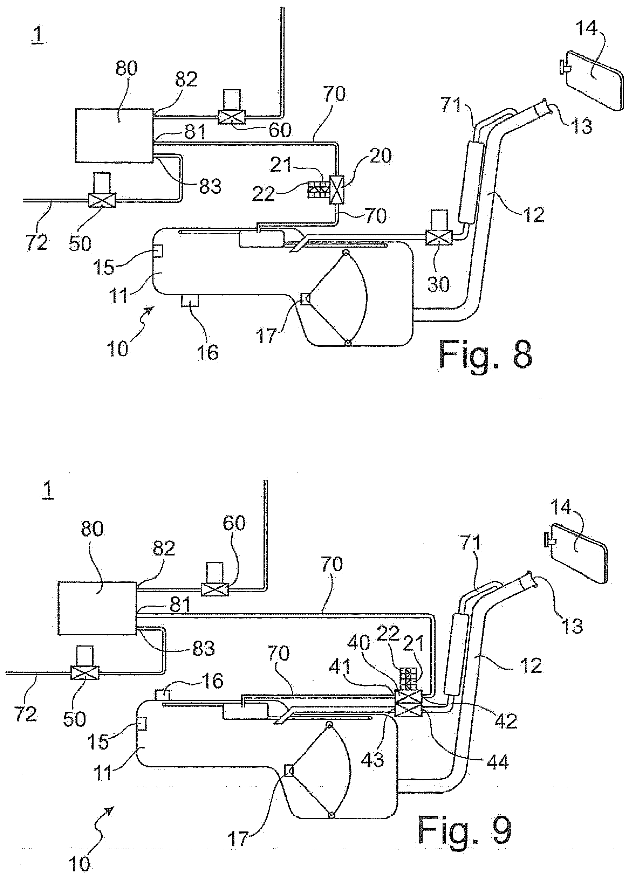

Figur 8 zeigt ein Betriebsflüssigkeitsbehältersystem 1 gemäß einer achten Ausführungsform der vorliegenden Erfindung. Das in Figur 8 dargestellte Betriebsflüssigkeitsbehältersystem 1 unterscheidet sich von dem in Figur 7 dargestellten Betriebsflüssigkeitsbehältersystem 1 lediglich dadurch, dass in der Betankungsentlüftungsleitung 71 ein elektrisch betätigbares Betankungsentlüftungsventils 30 angeordnet ist. Das Betankungsentlüftungsventil 30 ist, wie bereits erwähnt, über eine nicht dargestellte Datenleitung mit der elektronischen Steuerungseinrichtung zum Datenaustausch verbunden. Der übrige Aufbau und die übrige Funktionalität des in Figur 8 dargestellten Betriebsflüssigkeitsbehältersystems 1 ist identisch mit dem Aufbau und der Funktionalität des in Figur 7 dargestellten Betriebsflüssigkeitsbehältersystems.

In Figur 9 ist ein Betriebsflüssigkeitsbehältersystem 1 gemäß einer neunten Ausführungsform der vorliegenden Erfindung dargestellt. In dem Betriebsflüssigkeitsbehältersystem 1 gemäß der neunten Ausführungsform sind das Betriebsentlüftungsventil und das Betankungsentlüftungsventil zu einem Betriebs- und/oder Betankungsentlüftungsventils 40 zusammengefasst. Das Betriebs-und/oder Betankungsentlüftungsventils 40 weist einen Betriebsentlüftungseingangsanschluss 41, einem Betriebsentlüftungsausgangsanschluss 42, einen Betankungsentlüftungseingangsanschluss 43 und einem Betankungsentlüftungsausgangsanschluss 44 auf. Dabei sind der Betriebsentlüftungseingangsanschluss 41 und der Betankungsentlüftungseingangsanschluss 43 jeweils mit dem Betriebsflüssigkeitsbehälterinnenraum 11 fluidverbunden. Die Fluidverbindung des Betriebsentlüftungseingangsanschlusses 41 mit dem Betriebsflüssigkeitsbehälterinnenraum 11 erfolgt dabei über die Entlüftungsleitung 70, und die Fluidverbindung des Betankungsentlüftungseingangsanschlusses 43 mit dem Betriebsflüssigkeitsbehälterinnenraum 11 erfolgt über Betankungsentlüftungsleitung 71. Der Betriebsentlüftungsausgangsanschluss 42 ist mit der Atmosphäre über das Adsorptionsfilter 80 fluidverbunden, und der Betankungsentlüftungsausgangsanschluss 44 ist mit dem Einfüllrohr 12 fluidverbunden.

Das Betriebs- und Betankungsentlüftungsventils 40 ist elektrisch zwischen einer Belüftungsstellung, einer Betankungsstellung und einer Schließstellung betätigbar bzw. verstellbar. In der Belüftungsstellung ist der Betriebsflüssigkeitsbehälterinnenraum 11 mittels des Betriebs- und Betankungsentlüftungsventils 40 mit der Atmosphäre und mit dem Einfüllrohrs 12 fluidverbunden. In der Betankungsstellung ist der Betriebsflüssigkeitsbehälterinnenraum 11 mittels des Betriebs- und Betankungsentlüftungsventils 40 von der Atmosphäre fluidgetrennt und mittels des Betriebs- und Betankungsentlüftungsventils 40 mit dem Einfüllrohr 12 fluidverbunden. In der Schließstellung des Betriebs-und/oder Betankungsentlüftungsventils 40 ist der Betriebsflüssigkeitsbehälterinnenraum 11 mittels des Betriebs-und Betankungsentlüftungsventils 40 von der Atmosphäre und von dem Einfüllrohr 12 fluidgetrennt.

Die Verstellung des Betriebs- und Betankungsentlüftungsventils 40 zwischen der Belüftungsstellung, der Betankungsstellung und der Schließstellung erfolgt vorzugsweise über einen Schieber innerhalb des Betriebs- und Betankungsentlüftungsventils 40.

Das Überdruckschutzventil 21 und das Unterdruckschutzventil 22 sind in der Betriebsentlüftungsleitung 70 angeordnet und jeweils zwischen einer Offenstellung, in der ein Gasaustausch durch das jeweilige Ventil möglich ist, und einer Schließstellung, in der ein Gasaustausch durch das jeweilige Ventil unterbunden ist, beweglich. Das Überdruckschutzventil 21 befindet sich dabei in dessen Schließstellung, wenn der Innendruck im Betriebsflüssigkeitsbehälterinnenraum 11 kleiner als der Maximaldruck ist. Das Überdruckschutzventil 21 wird in dessen Offenstellung überführt, wenn der Innendruck im Betriebsflüssigkeitsbehälterinnenraum 11 größer als der Maximaldruck ist. Das Unterdruckschutzventil 22 befindet sich in dessen Schließstellung, wenn der Innendruck im Betriebsflüssigkeitsbehälterinnenraum 11 größer als der Minimaldruck ist. Wenn der Innendruck im Betriebsflüssigkeitsbehälterinnenraum 11 kleiner als der Minimaldruck ist, wird das Unterdruckschutzventil 22 in dessen Offenstellung überführt.

Der übrige Aufbau und die übrige Funktionalität des Betriebsflüssigkeitsbehältersystems 1 gemäß der neunten Ausführungsform ist identisch mit dem Aufbau und der Funktionalität des Betriebsflüssigkeitsbehältersystems gemäß der achten Ausführungsform, sodass auf die dortigen Ausführungen verwiesen wird.

### Bezugszeichenliste

- 1: Betriebsflüssigkeitsbehältersystem
- 10: Betriebsflüssigkeitsbehälter / Kraftstoffbehälter / Kraftstofftank
- 11: Betriebsflüssigkeitsbehälterinnenraum / Kraftstoffbehälterinnenraum
- 12: Einfüllrohr
- 13: Einfüllrohrverschluss
- 14: Tankklappe / Tankdeckel
- 15: Drucksensor / Innendrucksensor
- 16: Umgebungsdrucksensor / Außendrucksensor
- 17: Füllstandsensor
- 20: Entlüftungsventil / Betriebsentlüftungsventil
- 21: Überdruckschutzventil
- 22: Unterdruckschutzventil
- 23: Gasfluss-Steuerungselement
- 30: Betankungsentlüftungsventil
- 40: Betriebs- und Betankungsentlüftungsventil
- 41: Betriebsentlüftungseingangsanschluss
- 42: Betriebsentlüftungsausgangsanschluss
- 43: Betankungsentlüftungseingangsanschluss
- 44: Betankungsentlüftungsausgangsanschluss
- 50: Regenerierventil
- 60: Tank-Isolationsventil
- 70: Entlüftungsleitung / Betriebsentlüftungsleitung
- 71: Betankungsentlüftungsleitung
- 72: Spülleitung
- 80: Adsorptionsfilter / Aktivkohlefilter
- 81: Eingangsanschluss (des Adsorptionsfilters)
- 82: Ausgangsanschluss (des Adsorptionsfilters)
- 83: Spülanschluss (des Adsorptionsfilters)

## Patentansprüche

1. Verfahren zur Innendrucksteuerung eines Betriebsflüssigkeitsbehälters (10) eines Kraftfahrzeugs, die folgenden Verfahrensschritte aufweisend:
- Ermitteln (A1) eines Innendrucks des Betriebsflüssigkeitsbehälters (10) mittels eines in einem Betriebsflüssigkeitsbehälterinnenraum (11) angeordneten Drucksensors (15);
- Ermitteln (A2) eines Umgebungsdrucks des Betriebsflüssigkeitsbehälters (10) mittels eines Umgebungsdrucksensors (16);
- Bestimmen (A3) eines Differenzdrucks zwischen dem Innendruck und dem Umgebungsdruck mittels einer elektronischen Steuerungseinrichtung;
- Vergleichen (B3) des Differenzdrucks mit einem vorbestimmten Maximaldifferenzdruck mittels der Steuerungseinrichtung;
- Vergleichen (B4) des Differenzdrucks mit einem vorbestimmten Minimaldifferenzdruck mittels der Steuerungseinrichtung;
- Ausgeben (C1) eines Öffnungssignals von der Steuerungseinrichtung an ein Entlüftungsventil (20, 40), das in einer Entlüftungsleitung (70) oder zwischen dem Betriebsflüssigkeitsbehälterinnenraum (11) und der Entlüftungsleitung (70) angeordnet ist, wobei die Entlüftungsleitung (70) den Betriebsflüssigkeitsbehälterinnenraum (11) mit der Atmosphäre fluidverbindet, wenn der ermittelte Differenzdruck gleich dem Maximaldifferenzdruck oder größer als der Maximaldifferenzdruck ist oder wenn der ermittelte Differenzdruck gleich dem Minimaldifferenzdruck oder kleiner als der Minimaldifferenzdruck ist; und
- Überführen (D) des Entlüftungsventils (20, 40) in eine Offenstellung, in der der Betriebsflüssigkeitsbehälterinnenraum (11) mit der Atmosphäre mittels des Entlüftungsventils (20) fluidverbunden ist, bei Empfang des Öffnungssignals.

2. Verfahren nach Anspruch 1, **dadurch gekennzeichnet, dass** bei dem Verfahrensschritt des Überführens (D) des Entlüftungsventils (20, 40) in dessen Offenstellung das Entlüftungsventil (20, 40) graduell in dessen Offenstellung überführt wird.

3. Verfahren nach einem der vorhergehenden Ansprüche, **gekennzeichnet durch** die folgenden Merkmale:
- Ermitteln (E), ob sich ein in einer Spülleitung (72) oder zwischen einem Spülanschluss (83) eines Adsorptionsfilters (80) und der Spülleitung (72) angeordnetes Regenerierventil (50) in einer Offenstellung befindet, wobei die Spülleitung (72) einen Adsorptionsfilterinnenraum mit einem Ansaugtrakt einer Brennkraftmaschine des Kraftfahrzeugs fluidverbindet;
- Ausgeben (F) eines Schließsignals von der Steuerungseinrichtung an das Entlüftungsventil (20, 40), wenn sich das Regenerierventil (50) in der Offenstellung befindet; und
- Überführen (G) des Entlüftungsventils (20) in eine Schließstellung, in der der Betriebsflüssigkeitsbehälterinnenraum (11) von der Atmosphäre mittels des Entlüftungsventils (20) fluidgetrennt ist, bei Empfang des Schließsignals.

4. Betriebsflüssigkeitsbehältersystem (1), aufweisend:
- zumindest einen Betriebsflüssigkeitsbehälter (10);
- zumindest einen in einem Betriebsflüssigkeitsbehälterinnenraum (11) angeordneten Drucksensor (15) zur Bestimmung eines Innendrucks des Betriebsflüssigkeitsbehälterinnenraums (11);
- eine Entlüftungsleitung (70), die den Betriebsflüssigkeitsbehälterinnenraum (11) mit der Atmosphäre fluidverbindet;
- ein elektrisch betätigbares Entlüftungsventil (20, 40), das in der Entlüftungsleitung (70) oder zwischen dem Betriebsflüssigkeitsbehälterinnenraum (11) und der Entlüftungsleitung (70) angeordnet und zwischen einer Offenstellung, in der der Betriebsflüssigkeitsbehälterinnenraum (11) mit der Atmosphäre fluidverbunden ist, und einer Schließstellung, in der der Betriebsflüssigkeitsbehälterinnenraum (11) mittels des Entlüftungsventils (20) von der Atmosphäre fluidgetrennt ist, betätigbar ist; und
- einer elektronischen Steuerungseinrichtung, die mit dem Drucksensor (15) und dem Entlüftungsventil (20, 40) über eine Datenleitung verbunden ist,
- einen Umgebungsdrucksensor (16) zum Ermitteln eines Umgebungsdrucks des Betriebsflüssigkeitsbehälters (10) ;
wobei das Betriebsflüssigkeitsbehältersystem (1) durch folgendes Merkmal gekennzeichnet ist;
- die elektronische Steuerungseinrichtung ist dazu ausgebildet, ein Verfahren nach einem der Ansprüche 1 bis 2 auszuführen.

5. Betriebsflüssigkeitsbehältersystem (1) nach Anspruch 4, **gekennzeichnet durch** die folgenden Merkmale:
- das Betriebsflüssigkeitsbehältersystem (1) weist ein Adsorptionsfilter (80) auf, das mittels eines Eingangsanschlusses (81) mit der Entlüftungsleitung (70) und mittels eines Ausgangsanschlusses (82) mit der Atmosphäre fluidverbunden ist; und
- die elektronische Steuerungseinrichtung ist dazu ausgebildet, ein Verfahren nach Anspruch 3 auszuführen.

6. Betriebsflüssigkeitsbehältersystem (1) nach einem der Ansprüche 4 bis 5, **gekennzeichnet durch** folgende Merkmale:
- das Betriebsflüssigkeitsbehältersystem (1) weist ein Überdruckschutzventil (21) auf, das in der Entlüftungsleitung (70) oder zwischen dem Betriebsflüssigkeitsbehälterinnenraum (11) und der Entlüftungsleitung (70) angeordnet ist;
- das Überdruckschutzventil (21) ist zwischen einer Offenstellung, in der ein Gasaustausch durch das Überdruckschutzventil (21) ermöglicht ist, und einer Schließstellung, in der ein Gasaustausch durch das Überdruckschutzventil unterbunden ist, beweglich;
- das Überdruckschutzventil (21) befindet sich in dessen Schließstellung, wenn der Innendruck im Betriebsflüssigkeitsbehälterinnenraum (11) kleiner als der Maximaldruck ist; und
- das Überdruckschutzventil (21) wird in dessen Offenstellung überführt, wenn der Innendruck im Betriebsflüssigkeitsbehälterinnenraum (11) größer als der Maximaldruck ist.

7. Betriebsflüssigkeitsbehältersystem (1) nach einem der Ansprüche 4 bis 6, **gekennzeichnet durch** folgende Merkmale:
- das Betriebsflüssigkeitsbehältersystem (1) weist ein Unterdruckschutzventil (22) auf, das in der Entlüftungsleitung (70) oder zwischen dem Betriebsflüssigkeitsbehälterinnenraum (11) und der Entlüftungsleitung (70) angeordnet ist;
- das Unterdruckschutzventil (22) ist zwischen einer Offenstellung, in der ein Gasaustausch durch das Unterdruckschutzventil (22) ermöglicht ist, und einer Schließstellung, in der ein Gasaustausch durch das Unterdruckschutzventil unterbunden ist, beweglich;
- das Unterdruckschutzventil (22) befindet sich in dessen Schließstellung, wenn der Innendruck im Betriebsflüssigkeitsbehälterinnenraum (11) größer als der Minimaldruck ist; und
- das Unterdruckschutzventil (22) wird in dessen Offenstellung überführt, wenn der Innendruck im Betriebsflüssigkeitsbehälterinnenraum (11) kleiner als der Minimaldruck ist.

8. Betriebsflüssigkeitsbehältersystem (1) nach einem der Ansprüche 4 bis 7, **gekennzeichnet durch** die folgenden Merkmale:
- das Betriebsflüssigkeitsbehältersystem (1) weist ein in den Betriebsflüssigkeitsbehälterinnenraum (11) mündendes Einfüllrohr (12) und eine Betankungsentlüftungsleitung (71) auf, die mit dem Betriebsflüssigkeitsbehälterinnenraum (11) und dem Einfüllrohr (12) fluidverbunden ist;
- das elektrisch betätigbare Entlüftungsventil (20, 40) ist als Betriebs- und/oder Betankungsentlüftungsventil (40) mit einem Betriebsentlüftungseingangsanschluss (41), einem Betriebsentlüftungsausgangsanschluss (42), einem Betankungsentlüftungseingangsanschluss (43) und einem Betankungsentlüftungsausgangsanschluss (44) ausgebildet;
- der Betriebsentlüftungseingangsanschluss (41) und der Betankungsentlüftungseingangsanschluss (43) sind jeweils mit dem Betriebsflüssigkeitsbehälterinnenraum (11) fluidverbunden, der Betriebsentlüftungsausgangsanschluss (42) ist mit der Atmosphäre fluidverbunden, und der Betankungsentlüftungsausgangsanschluss (44) ist mit dem Einfüllrohr (12) fluidverbunden;
- das Betriebs- und/oder Betankungsentlüftungsventil (40) ist zwischen einer Belüftungsstellung, einer Betankungsstellung und einer Schließstellung elektrisch betätigbar;
- in der Belüftungsstellung ist der Betriebsflüssigkeitsbehälterinnenraum (11) mittels des Betriebs- und/oder Betankungsentlüftungsventils (40) mit der Atmosphäre und mit dem Einfüllrohr (12) fluidverbunden;
- in der Betankungsstellung ist der Betriebsflüssigkeitsbehälterinnenraum (11) mittels des Betriebs- und/oder Betankungsentlüftungsventils (40) von der Atmosphäre fluidgetrennt und mittels des Betriebs- und/oder Betankungsentlüftungsventils (40) mit dem Einfüllrohr (12) fluidverbunden; und
- in der Schließstellung ist der Betriebsflüssigkeitsbehälterinnenraum (11) mittels des Betriebs- und/oder Betankungsentlüftungsventils (40) von der Atmosphäre und dem Einfüllrohr (12) fluidgetrennt.

## Claims

1. A method for controlling the internal pressure of an operating liquid container (10) of a motor vehicle, having the following method steps of:
- determining (A1) an internal pressure of the operating liquid container (10) by means of a pressure sensor (15) arranged in an operating liquid container interior (11);
- determining (A2) an ambient pressure of the operating liquid container (10) by means of an ambient pressure sensor (16);
- determining (A3) a differential pressure between the internal pressure and the ambient pressure by means of an electronic control device;
- comparing (B3) the differential pressure with a predetermined maximum differential pressure by means of the control device;
- comparing (B4) the differential pressure with a predetermined minimum differential pressure by means of the control device;
- outputting (C1) an opening signal from the control device to a vent valve (20, 40) that is arranged in a vent line (70) or between the operating liquid container interior (11) and the vent line (70), wherein the vent line (70) fluidically connects the operating liquid container interior (11) to the atmosphere when the determined differential pressure is equal to the maximum differential pressure or above the maximum differential pressure or when the determined differential pressure is equal to the minimum differential pressure or below the minimum differential pressure; and
- transferring (D) the vent valve (20, 40) into an open position, in which the operating liquid container interior (11) is fluidically connected to the atmosphere by means of the vent valve (20), when the opening signal is received.

2. The method as claimed in claim 1, **characterized in that**, in the method step of transferring (D) the vent valve (20, 40) into its open position, the vent valve (20, 40) is transferred gradually into its open position.

3. The method as claimed in one of the preceding claims, **characterized by** the following features of:
- determining (E) whether a regenerating valve (50) arranged in a flushing line (72) or between a flushing connection (83) of an adsorption filter (80) and the flushing line (72) is in an open position, wherein the flushing line (72) fluidically connects an adsorption filter interior to an intake tract of an internal combustion engine of the motor vehicle;
- outputting (F) a closing signal from the control device to the vent valve (20, 40) when the regenerating valve (50) is in the open position; and
- transferring (G) the vent valve (20) into a closed position, in which the operating liquid container interior (11) is fluidically separated from the atmosphere by means of the vent valve (20), when the closing signal is received.

4. An operating liquid container system (1) having:
- at least one operating liquid container (10);
- at least one pressure sensor (15), arranged in an operating liquid container interior (11), for determining an internal pressure of the operating liquid container interior (11);
- a vent line (70) that fluidically connects the operating liquid container interior (11) to the atmosphere;
- an electrically actuable vent valve (20, 40) that is arranged in the vent line (70) or between the operating liquid container interior (11) and the vent line (70) and is actuable between an open position, in which the operating liquid container interior (11) is fluidically connected to the atmosphere, and a closed position, in which the operating liquid container interior (11) is fluidically separated from the atmosphere by means of the vent valve (20);
- an electronic control device that is connected to the pressure sensor (15) and the vent valve (20, 40) via a data line; and
- an ambient pressure sensor (16) for determining an ambient pressure of the operating liquid container (10),
wherein the operating liquid container system (1) is **characterized by** the following feature:
- the electronic control device is configured to carry out a method as claimed in one of the claims 1 and/or 2.

5. The operating liquid container system (1) as claimed in claim 4, **characterized by** the following features:
- the operating liquid container system (1) has an adsorption filter (80) that is fluidically connected to the vent line (70) by means of an inlet connection (81) and to the atmosphere by means of an outlet connection (82); and
- the electronic control device is configured to carry out the method as claimed in claim 3.

6. The operating liquid container system (1) as claimed in one of claims 4 to 5, **characterized by** the following features:
- the operating liquid container system (1) has an overpressure protection valve (21) that is arranged in the vent line (70) or between the operating liquid container interior (11) and the vent line (70);
- the overpressure protection valve (21) is actuable between an open position, in which gas exchange is allowed by the overpressure protection valve (21), and a closed position, in which gas exchange is prevented by the overpressure protection valve;
- the overpressure protection valve (21) is in its closed position when the internal pressure in the operating liquid container interior (11) is below the maximum pressure; and
- the overpressure protection valve (21) is transferred into its open position when the internal pressure in the operating liquid container interior (11) is above the maximum pressure.

7. The operating liquid container system (1) as claimed in one of claims 4 to 6, **characterized by** the following features:
- the operating liquid container system (1) has a negative pressure protection valve (22) that is arranged in the vent line (70) or between the operating liquid container interior (11) and the vent line (70);
- the negative pressure protection valve (22) is actuable between an open position, in which gas exchange is allowed by the negative pressure protection valve (22), and a closed position, in which gas exchange is prevented by the negative pressure protection valve;
- the negative pressure protection valve (22) is in its closed position when the internal pressure in the operating liquid container interior (11) is above the minimum pressure; and
- the negative pressure protection valve (22) is transferred into its open position when the internal pressure in the operating liquid container interior (11) is below the minimum pressure.

8. The operating liquid container system (1) as claimed in one of the claims 4 to 7, **characterized by** the following features:
- the operating liquid container system (1) has a filler tube (12) that leads into the operating liquid container interior (11), and a refueling vent line (71) that is fluidically connected to the operating liquid container interior (11) and the filler tube (12);
- the electrically actuable vent valve (20, 40) is configured as a service and/or refueling vent valve (40) with a service venting inlet connection (41), a service venting outlet connection (42), a refueling venting inlet connection (43) and a refueling venting outlet connection (44);
- the service venting inlet connection (41) and the refueling venting inlet connection (43) are each fluidically connected to the operating liquid container interior (11), the service venting outlet connection (42) is fluidically connected to the atmosphere, and the refueling venting outlet connection (44) is fluidically connected to the filler tube (12);
- the service and/or refueling vent valve (40) is electrically actuable between a venting position, a refueling position and a closed position;
- in the venting position, the operating liquid container interior (11) is fluidically connected to the atmosphere and to the filler tube (12) by means of the service and/or refueling vent valve (40);
- in the refueling position, the operating liquid container interior (11) is fluidically separated from the atmosphere by means of the service and/or refueling vent valve (40) and fluidically connected to the filler tube (12) by means of the service and/or refueling vent valve (40); and
- in the closed position, the operating liquid container interior (11) is fluidically separated from the atmosphere and the filler tube (12) by means of the service and/or refueling vent valve (40).

## Revendications

1. Procédé de commande de pression interne d'un réservoir pour liquide de fonctionnement (10) d'un véhicule automobile, présentant les étapes de procédé suivantes :
- détermination (A1) d'une pression interne du réservoir pour liquide de fonctionnement (10) au moyen d'un capteur de pression (15) disposé dans un espace interne de réservoir pour liquide de fonctionnement (11) ;
- détermination (A2) d'une pression ambiante du réservoir pour liquide de fonctionnement (10) au moyen d'un capteur de pression ambiante (16) ;
- estimation (A3) d'une pression différentielle entre la pression interne et la pression ambiante au moyen d'un dispositif de commande électronique ;
- comparaison (B3) de la pression différentielle à une pression différentielle maximale estimée au préalable au moyen du dispositif de commande ;
- comparaison (B4) de la pression différentielle à une pression différentielle minimale estimée au préalable au moyen du dispositif de commande ;
- émission (C1) d'un signal d'ouverture à partir du dispositif de commande vers une soupape d'évacuation d'air (20, 40) qui est disposée dans une conduite d'évacuation d'air (70) ou entre l'espace interne de réservoir pour liquide de fonctionnement (11) et la conduite d'évacuation d'air (70), dans lequel la conduite d'évacuation d'air (70) met en liaison fluidique l'espace interne de réservoir pour liquide de fonctionnement (11) et l'atmosphère lorsque la pression différentielle déterminée est égale à la pression différentielle maximale ou supérieure à la pression différentielle maximale ou lorsque la pression différentielle déterminée est égale à la pression différentielle minimale ou inférieure à la pression différentielle minimale ; et
- passage (D) de la soupape d'évacuation d'air (20, 40) dans une position ouverte dans laquelle l'espace interne de réservoir pour liquide de fonctionnement (11) est en liaison fluidique avec l'atmosphère au moyen de la soupape d'évacuation d'air (20), lors d'une réception du signal d'ouverture.

2. Procédé selon la revendication 1, **caractérisé en ce que,** lors de l'étape de procédé consistant à passer (D) la soupape d'évacuation d'air (20, 40) dans sa position ouverte, la soupape d'évacuation d'air (20, 40) passe progressivement dans sa position ouverte.

3. Procédé selon l'une des revendications précédentes, **caractérisé par** les caractéristiques suivantes :
- fait de déterminer (E) si une soupape de régénération (50), disposée dans une conduite de rinçage (72) ou entre un raccord de rinçage (83) d'un filtre d'adsorption (80) et la conduite de rinçage (72), se trouve dans une position ouverte, dans lequel la conduite de rinçage (72) met en liaison fluidique un espace interne de filtre d'adsorption et une tubulure d'admission d'un moteur à combustion interne du véhicule automobile ;
- émission (F) d'un signal de fermeture à partir du dispositif de commande vers la soupape d'évacuation d'air (20, 40) lorsque la soupape de régénération (50) se trouve dans la position ouverte ; et
- passage (G) de la soupape d'évacuation d'air (20) dans une position fermée dans laquelle l'espace interne de réservoir pour liquide de fonctionnement (11) est en séparation fluidique de l'atmosphère au moyen de la soupape d'évacuation d'air (20), lors d'une réception du signal de fermeture.

4. Système de réservoir pour liquide de fonctionnement (1), présentant :
- au moins un réservoir pour liquide de fonctionnement (10) ;
- au moins un capteur de pression (15) disposé dans un espace interne de réservoir pour liquide de fonctionnement (11) pour l'estimation d'une pression interne de l'espace interne de réservoir pour liquide de fonctionnement (11) ;
- une conduite d'évacuation d'air (70) qui met en liaison fluidique l'espace interne de réservoir pour liquide de fonctionnement (11) et l'atmosphère ;
- une soupape d'évacuation d'air (20, 40) à actionnement électrique qui est disposée dans la conduite d'évacuation d'air (70) ou entre l'espace interne de réservoir pour liquide de fonctionnement (11) et la conduite d'évacuation d'air (70) et qui peut être actionnée entre une position ouverte, dans laquelle l'espace interne de réservoir pour liquide de fonctionnement (11) est en liaison fluidique avec l'atmosphère, et une position fermée, dans laquelle l'espace interne de réservoir pour liquide de fonctionnement (11) est en séparation fluidique de l'atmosphère au moyen de la soupape d'évacuation d'air (20) ; et
- un dispositif de commande électronique qui est connecté au capteur de pression (15) et à la soupape d'évacuation d'air (20, 40) par une ligne de données,
- un capteur de pression ambiante (16) pour la détermination d'une pression ambiante du réservoir pour liquide de fonctionnement (10) ; dans lequel le système de réservoir pour liquide de fonctionnement (1) est **caractérisé par** la caractéristique suivante ;
- le dispositif de commande électronique est configuré pour mettre en œuvre un procédé selon l'une des revendications 1 à 2.

5. Système de réservoir pour liquide de fonctionnement (1) selon la revendication 4, **caractérisé par** les caractéristiques suivantes :
- le système de réservoir pour liquide de fonctionnement (1) présente un filtre d'adsorption (80) qui est en communication fluidique avec la conduite d'évacuation d'air (70) au moyen d'un raccord d'entrée (81) et avec l'atmosphère au moyen d'un raccord de sortie (82) ; et
- le dispositif de commande électronique est configuré pour mettre en œuvre un procédé selon la revendication 3.

6. Système de réservoir pour liquide de fonctionnement (1) selon l'une des revendications 4 à 5, **caractérisé par** les caractéristiques suivantes :
- le système de réservoir pour liquide de fonctionnement (1) présente une soupape de protection contre la surpression (21) qui est disposée dans la conduite d'évacuation d'air (70) ou entre l'espace interne de réservoir pour liquide de fonctionnement (11) et la conduite d'évacuation d'air (70) ;
- la soupape de protection contre la surpression (21) est mobile entre une position ouverte, dans laquelle un échange de gaz est rendu possible par la soupape de protection contre la surpression (21), et une position fermée, dans laquelle un échange de gaz est empêché par la soupape de protection contre la surpression ;
- la soupape de protection contre la surpression (21) se trouve dans sa position fermée lorsque la pression interne dans l'espace interne de réservoir pour liquide de fonctionnement (11) est inférieure à la pression maximale ; et
- la soupape de protection contre la surpression (21) passe dans sa position ouverte lorsque la pression interne dans l'espace interne de réservoir pour liquide de fonctionnement (11) est supérieure à la pression maximale.

7. Système de réservoir pour liquide de fonctionnement (1) selon l'une des revendications 4 à 6, **caractérisé par** les caractéristiques suivantes :
- le système de réservoir pour liquide de fonctionnement (1) présente une soupape de protection contre la dépression (22) qui est disposée dans la conduite d'évacuation d'air (70) ou entre l'espace interne de réservoir pour liquide de fonctionnement (11) et la conduite d'évacuation d'air (70) ;
- la soupape de protection contre la dépression (22) est mobile entre une position ouverte, dans laquelle un échange de gaz est rendu possible par la soupape de protection contre la dépression (22), et une position fermée, dans laquelle un échange de gaz est empêché par la soupape de protection contre la dépression ;
- la soupape de protection contre la dépression (22) se trouve dans sa position fermée lorsque la pression interne dans l'espace interne de réservoir pour liquide de fonctionnement (11) est inférieure à la pression maximale ; et
- la soupape de protection contre la dépression (22) passe dans sa position ouverte lorsque la pression interne dans l'espace interne de réservoir pour liquide de fonctionnement (11) est inférieure à la pression minimale.

8. Système de réservoir pour liquide de fonctionnement (1) selon l'une des revendications 4 à 7, **caractérisé par** les caractéristiques suivantes :
- le système de réservoir pour liquide de fonctionnement (1) présente un tube de remplissage (12) débouchant dans l'espace interne de réservoir pour liquide de fonctionnement (11) et une conduite d'évacuation d'air de ravitaillement (71) qui est en liaison fluidique avec l'espace interne de réservoir pour liquide de fonctionnement (11) et le tube de remplissage (12) ;
- la soupape d'évacuation d'air (20, 40) à actionnement électrique est conçue comme une soupape d'évacuation d'air de fonctionnement et/ou de ravitaillement (40) comportant un raccord d'entrée d'évacuation d'air de fonctionnement (41), un raccord de sortie d'évacuation d'air de fonctionnement (42), un raccord d'entrée d'évacuation d'air de ravitaillement (43) et un raccord de sortie d'évacuation d'air de ravitaillement (44) ;
- le raccord d'entrée d'évacuation d'air de fonctionnement (41) et le raccord d'entrée d'évacuation d'air de ravitaillement (43) sont respectivement en liaison fluidique avec l'espace interne de réservoir pour liquide de fonctionnement (11), le raccord de sortie d'évacuation d'air de fonctionnement (42) est en liaison fluidique avec l'atmosphère, et le raccord de sortie d'évacuation d'air de ravitaillement (44) est en liaison fluidique avec le tube de remplissage (12) ;
- la soupape d'évacuation d'air de fonctionnement et/ou de ravitaillement (40) peut être actionnée électriquement entre une position d'évacuation d'air, une position de ravitaillement et une position fermée ;
- dans la position d'évacuation d'air, l'espace interne de réservoir pour liquide de fonctionnement (11) est en liaison fluidique avec l'atmosphère et avec le tube de remplissage (12) au moyen de la soupape d'évacuation d'air de fonctionnement et/ou de ravitaillement (40) ;
- dans la position de ravitaillement, l'espace interne de réservoir pour liquide de fonctionnement (11) est en séparation fluidique de l'atmosphère au moyen de la soupape d'évacuation d'air de fonctionnement et/ou de ravitaillement (40) et est en liaison fluidique avec le tube de remplissage (12) au moyen de la soupape d'évacuation d'air de fonctionnement et/ou de ravitaillement (40) ; et
- dans la position fermée, l'espace interne de réservoir pour liquide de fonctionnement (11) est en séparation fluidique de l'atmosphère et du tube de remplissage (12) au moyen de la soupape d'évacuation d'air de fonctionnement et/ou de ravitaillement (40).
